(19) **Europäisches Patentamt**

**European Patent Office**

**Office européen des brevets**

(11) **EP 1 343 099 A2**

(12) **EUROPÄISCHE PATENTANMELDUNG**

(43) Veröffentlichungstag:
**10.09.2003 Patentblatt 2003/37**

(51) Int Cl.⁷: **G06F 17/30, H04L 29/06**

(21) Anmeldenummer: **03004384.8**

(22) Anmeldetag: **03.03.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **06.03.2002 DE 10209794**

(71) Anmelder: **APE Ptacek Engineering GmbH
81737 München (DE)**

(72) Erfinder:
• **Eichenseher, Ingo
86153 Augsburg (DE)**
• **Ptacek, Helmut
81739 München (DE)**

(74) Vertreter: **Beetz & Partner Patentanwälte
Steinsdorfstrasse 10
80538 München (DE)**

(54) **Kommunikationssystem für Datenbanken**

(57) Die Erfindung betrifft ein Datenkommunikationssystem, insbesondere ein Verfahren zum Übertragen von relationalen Datenbanken, ein Verfahren zum Verwalten von zu empfangenden Datenpaketen und ein Verfahren zum Verwalten einer Mehrzahl von zu sendenden Dateien sowie die entsprechenden Datenverarbeitungsvorrichtungen, mit dem eine sichere und effiziente Übertragung von großen Datenmengen über eine unidirektionale Datenübertragungsverbindung ermöglicht wird.

Eine Datenverarbeitungsvorrichtung umfasst eine Zentraleinheit (1), eine Peripherieeinheit (7) und eine unidirektionalen Datenkommunikationseinrichtung (10). Die Zentraleinheit (1) weist Datenbankmittel, die eine Zentraldatenbank (2) speichern und eine Auswahleinrichtung auf, die einen Eintrag in der Zentraldatenbank (2) auswählt. Ein Versandpaket (30) mit allen Datensätzen des Eintrags wird an die Peripherieeinheit (7) übertragen. Die Peripherieeinheit (7) weist Datenbankmittel auf, die Datensätze (32) des Versandpakets (30) in eine Peripheriedatenbank (9) einfügen.

Fig. 1

## Beschreibung

Die Erfindung betrifft ein Datenkommunikationssystem, insbesondere ein Verfahren zum Übertragen von relationalen Datenbanken, ein Verfahren zum Verwalten von zu empfangenden Datenpaketen und ein Verfahren zum Verwalten einer Mehrzahl von zu sendenden Dateien sowie die entsprechenden Datenverarbeitungsvorrichtungen.

In vielen modernen Datenverarbeitungsanwendungen ist es vorgesehen, daß ein Benutzer, der Zugriff auf zentral gespeicherte und gepflegte Daten benötigt, diesen Zugriff über ein Datenkommunikationssystem von anderen Orten als dem tatsächlichen Ort der zentralen Datenspeicherung vornehmen kann. Beispiele für solche Datenverarbeitungsanwendungen sind unter anderem im Bereich des E-Commerce zu finden. Ein Kunde kann beispielsweise in einem umfangreichen Online-Katalog eines Anbieters nach geeigneten Waren suchen und diese bestellen. Weitere Anwendungsmöglichkeiten sind elektronische Datenbanken, die beispielsweise Informationen über zu verkaufende Fahrzeuge, Immobilien oder verfügbare Patentdokumente enthalten. Da diese Datenbanken oftmals digitale Fotos, Filme oder digitalisierte Dokumente enthalten, entstehen aufgrund der großen Datenmengen, die beim Zugriff des Benutzers anfallen, hohe Anforderungen an das Datenkommunikationssystem.

Durch die Verwendung des Internets und eines handelsüblichen Web-Browsers ist es möglich mit einem PC mit Internetanschluß Zugang zu den vielfältigsten Daten im Internet zu haben. Über den Web-Browser greift der Benutzer online auf die zentral gespeicherten Daten, beispielsweise einer Patentdatenbank, zu. Da der Benutzerrechner nur als intelligentes Datensichtgerät verwendet wird, entstehen insbesondere bei Datenbanken mit grafischem Inhalt bei jedem einzelnen Zugriff hohe Datenmengen, die über das Datenkommunikationssystem von der zentralen Datenbank über das Internet zu dem Benutzerrechner transportiert werden müssen. Dabei kann es auch zu redundanten Datenübertragungen kommen, wenn ein Benutzer beispielsweise mehrfach auf die gleichen Daten zugreift. Durch die limitierten Datenübertragungsbandbreiten im Internet entstehen insbesondere bei Grafiken, Bildern oder Filmen oftmals lange Wartezeiten bis zum vollständigen Abschluß der Datenübertragung von Multimediadaten auf den Benutzerrechner.

Eine andere Lösung sieht vor, auf dem Benutzerrechner eine Kopie der zentralen Datenbank einzurichten und so einen Datenzugriff ohne Wartezeiten zu ermöglichen. Um weiterhin von dem zentral gepflegten Datenbestand zu profitieren, ist es üblich, den Datenbestand nach einer Änderung über ein Speichermedium, wie z.B. eine CD-ROM, an die einzelnen Benutzer zu verteilen, damit die Benutzer ihre Benutzerdatenbanken aktualisieren können. Dieses Verfahren eignet sich jedoch nur für Datenbestände, die sich relativ selten ändern. Für Daten, die stündlichen oder täglichen Änderungen unterworfen sind, ist das Verteilen des Datenbestandes über ein Speichermedium nicht geeignet.

Bei der Übertragung von Daten über Datenübertragungskanäle mit hoher Übertragungsrate wie Satellitenverbindungen oder TV-Breitbandkabelnetzwerke tritt weiterhin das Problem auf, daß diese Übertragungskanäle keinen Rückkanal zur Synchronisation oder zum Abgleich der Datenbestände aufweisen. Wenn der Sender beispielsweise keine Information über fehlende Datensätze beim Empfänger hat, muß er den gesamten Datenbestand fortlaufend übertragen, um sicherzustellen, daß der Empfänger die fehlenden Datensätze erhält. Dieses Vorgehen ist jedoch bei großen, sich ändernden Datenmengen nicht praktikabel, da sich die Daten in der Zeit, die nötig ist, um den gesamten Datenbestand zu übertragen, bereits wieder geändert haben können.

Aufgrund des fehlenden Rückkanals kann es bei der Übertragung von relationalen Datenbanken zu einem weiteren Problem kommen, wenn einzelne Datenpakete verlorengehen oder die Datenübertragungsverbindung gestört ist, da keine Möglichkeit besteht, den Sender zu einer Wiederholung der Datenübertragung aufzufordern und ein einzelner fehlerhafter oder fehlender Datensatz die Konsistenz der gesamten Datenbank gefährdet. Es ist also möglich, daß durch Fehler in der Datenübertragung die gesamte Benutzerdatenbank funktionsunfähig wird. Dieses Problem wird insbesondere durch große fehlerfrei zu übertragende Datenmengen und die relativ hohen Fehlerraten von Satellitenverbindungen und TV-Kabelnetzwerken verstärkt. In einem solchen Fall kann auch durch die Wiederholung der Übertragung der gesamten Datenbank das Problem des Ausfalls der gesamten Datenbank durch auftretende Übertragungsfehler nicht beseitigt werden.

Ein weiteres Problem bei der Übertragung von sehr großen Datenmengen ist es, daß der Empfang von sehr vielen Datenpaketen, in die beispielsweise große Multimediadateien aufgespalten werden, verwaltet und überwacht werden muß. Durch das Verwalten von großen Listen, mit zum Teil mehreren Tausend Einträgen, entsteht ein großer Speicher- und Rechenzeitbedarf. Ein ähnliches Problem entsteht bei der Verwaltung einer großen Anzahl von zu empfangenden Dateien.

Auch beim Senden einer großen Anzahl von Dateien können in einem Datenkommunikationssystem Probleme bei der Verwaltung der Dateilisten auftreten, wenn sich diese zudem laufend ändern. Um auf Änderungen in einer Liste von zu sendenden Dateien zu reagieren, ist es notwendig, diese Änderungen zu ermitteln, ohne dabei zwei eventuell sehr große Listen direkt miteinander zu vergleichen, da ein derartiges Vorgehen eine Komplexität von $O(n^2)$ aufweist.

Die Aufgabe der vorliegenden Erfindung ist es, ein Datenkommunikationssystem zu schaffen, das eine sichere und effiziente Übertragung von großen Datenmengen über eine unidirektionale Datenübertragungsverbindung ermöglicht. Insbesondere ist das Übertragen von relationalen Datenbanken über Datenkanäle, die mit Datenübertragungsfehlern behaftet sind und keine Rückkanäle aufweisen, derart zu ermöglichen, daß keine Inkonsistenzen in der Empfängerdatenbank auftreten. Weiterhin sind Verfahren und Vorrichtungen vorzusehen, die ein effizientes Senden und Empfangen von großen Datenmengen, insbesondere eine große Anzahl von Datenpaketen oder Dateien, ermöglichen.

Diese Aufgabe wird durch die unabhängigen Ansprüche gelöst. Die abhängigen Ansprüche betreffen vorteilhafte Ausgestaltungen der Erfindung.

In einem Verfahren zum Übertragen von relationalen Datenbanken von einer Zentraldatenbank über eine unidirektionale Datenkommunikationsverbindung zu einer Peripheriedatenbank weist die relationale Datenbank der Zentraldatenbank mehrere Tabellen auf. Die Tabellen umfassen jeweils einen oder mehrere Datensätze, die jeweils einen Schlüssel aufweisen. Auf die Datensätze der Tabellen wird über die Schlüssel zugegriffen. Ein Datensatz ist eine Abfolge von Daten, die in den Feldern der Tabelle gespeichert werden. Die Schlüssel der Datensätze können der Identifikation der Datensätze und dem Zugriff auf die Datensätze dienen. Ein Datensatz kann mehrere Felder aufweisen, die jeweils aus einer Feldidentifizierung (Feld-ID) und einem zugehörigen Wert bestehen.

Ein Eintrag in der Datenbank kann mehrere in unterschiedlichen Tabellen gespeicherte Datensätze umfassen. Ein Eintrag stellt eine logisch zusammenhängende Einheit von Daten in der Datenbank dar. Beispielsweise handelt es sich in einer Datenbank, die zum Kauf angebotene Kraftfahrzeuge enthält, bei der Menge der Datensätze, die Informationen über ein bestimmtes Fahrzeug enthalten, um einen Eintrag für das bestimmte Fahrzeug. In Abhängigkeit von dem Aufbau der Tabellen der Datenbank sind die Datensätze für dieses Fahrzeug in mehreren unterschiedlichen Tabellen gespeichert. Beispielsweise sind in einer Tabelle Informationen über Kraftfahrzeugtypen und in einer anderen Tabelle Informationen über die individuelle Ausstattung der zum Kauf angebotenen Fahrzeuge enthalten.

Gemäß dem erfindungsgemäßen Verfahren zum Übertragen der relationalen Datenbank wird ein Eintrag zum Versenden ausgewählt. Zweckmäßigerweise wird ein Eintrag der Zentraldatenbank zum Versenden ausgewählt, wenn er neu in der Zentraldatenbank eingetragen wurde. Durch das Auswählen und Übertragen von neuen Einträgen der Zentraldatenbank an die Peripheriedatenbank können neue Daten, die in der Peripheriedatenbank noch nicht vorhanden sind, an diese übertragen werden. Selbstverständlich ist es auch möglich diejenigen Einträge der Zentraldatenbank auszuwählen, die sich verändert haben, um die Peripheriedatenbank zu aktualisieren.

Für den ausgewählten Eintrag werden anhand der Datensatzschlüssel alle zugehörigen Datensätze der Tabellen ermittelt. Aus allen ermittelten Datensätzen für den ausgewählten Eintrag wird ein Versandpaket zusammengestellt. Das Versandpaket kann in einem Speicherbereich der Zentraldatenbank vorübergehend gespeichert werden, bevor es an die Peripheriedatenbank übertragen wird. In dem Versandpaket können alle zugehörigen Datensätze für den ausgewählten Eintrag enthalten sein. Beispielsweise umfaßt ein Versandpaket für ein Fahrzeug alle Datensätze der relationalen Datenbank, die in Beziehung zu dem entsprechenden Fahrzeug stehen. In einem Versandpaket für einen Eintrag sind somit alle Daten für diesen Eintrag enthalten. Ein Versandpaket kann zur Übertragung in einer Datei abgespeichert werden, da die meisten Datenübertragungssysteme eine Datei-weise Datenübertragung unterstützen.

Die Datensätze des Versandpakets werden anschließend in die Tabellen der Peripheriedatenbank eingefügt. Da in einem Versandpaket alle zugehörigen Datensätze des Eintrags gemeinsam an die Peripherieeinheit übertragen werden, kann der Eintrag vollständig und unabhängig von etwaigen Übertragungsfehlern bei der Übertragung von Versandpaketen anderer Einträge in der Peripheriedatenbank rekonstruiert werden. Sollte ein Versandpaket aufgrund von Übertragungsfehlern ausfallen oder gestört empfangen werden, sind nur die Datensätze des entsprechenden Eintrags davon betroffen. Fallen Versandpakete aus oder werden diese aufgrund von Übertragungsfehlern verworfen, erfolgen keine Änderungen in den Tabellen der Peripheriedatenbank. In diesem Fall sind zwar die Informationen über diesen Eintrag bei der Datenübertragung verlorengegangen, die Datensätze anderer Einträge sind davon aber nicht betroffen. Es ist also in der Peripheriedatenbank weiterhin möglich auf Datensätze anderer Einträge zuzugreifen, ohne daß eine Inkonsistenz in der Datenbank auftritt.

Das erfindungsgemäße Verfahren ist besonders zur Ausführung in elektronischen Rechnern geeignet. Ein Computer kann die Zentraldatenbank und ein weiterer Computer die Peripheriedatenbank aufweisen.

Um Änderungen in Datensätzen bereits vorhandener Einträge an die Peripheriedatenbank zu übertragen, können auch bereits bestehende Einträge ausgewählt und deren Versandpakete zusammengestellt und an die Peripheriedatenbank übertragen werden. Durch Ersetzen der bereits vorhandenen Datensätze des ausgewählten Eintrags durch die empfangenen Datensätze des Versandpakets wird sichergestellt, daß nur konsistente Änderungen in den Tabellen der Peripheriedatenbank erfolgen.

Um die Effizienz der Datenübertragung zu erhöhen ist es zweckmäßig, die Versandpakete für mehrere Einträge der Zentraldatenbank zu einer Dabei zusammenzufassen. Nach Übertragung der Datei an die Peripheriedatenbank können dort die einzelnen Versandpakete wieder getrennt und die entsprechenden Datensätze in die Tabellen der Peripheriedatenbank eingefügt oder dort ersetzt werden.

In einer zweckmäßigen Ausgestaltung der Erfindung weist ein Datensatz einer Tabelle einen Schlüssel für einen Datensatz einer anderen Tabelle auf. Da der Zugriff auf die Datensätze über die Datensatzschlüssel erfolgt, ist es somit möglich, komplexe Datenstrukturen zu erzeugen. Durch das Speichern des Schlüssels eines Datensatzes einer anderen Tabelle entsteht ein Verweis auf diesen Datensatz. Die entsprechenden Tabellen werden auch als Master-Slave-Tabellen bezeichnet. Beispielsweise kann in einem Datensatz für ein angebotenes Fahrzeug ein Herstellerschlüssel gespeichert werden. In einer entsprechenden Herstellertabelle wird über den Herstellerschlüssel der Datensatz des Herstellers ermittelt. Weisen verschiedene Fahrzeuge den gleichen Hersteller auf, so kann durch das Speichern des Herstellerschlüssels in der Fahrzeugtabelle und dem gemeinsamen Speichern des Herstellerdatensatzes in der Herstellertabelle Speicherplatz eingespart werden. Bei der Übertragung der Einträge für die beiden Kraftfahrzeuge wird der entsprechende Herstellerdatensatz, auf den in den beiden Fahrzeugdatensätzen über den Herstellerschlüssel verwiesen wird, in den beiden Versandpaketen der Fahrzeuge doppelt berücksichtigt. Der Herstellerdatensatz wird in diesem Beispiel in beide Versandpakete übernommen und in jedem Versandpaket getrennt übertragen. Auf diese Weise kann in der Peripheriedatenbank immer sichergestellt werden, daß für jedes Fahrzeug ein vollständiger Eintrag vorliegt.

Vorzugsweise besitzen die Tabellen jeweils eine eindeutige Tabellenidentifikation (Tabellen-ID). Ein Versandpaket kann die Tabellenidentifikationen für diejenigen Tabellen umfassen, die Datensätze für den ausgewählten Eintrag aufweisen. Das Versandpaket weist weiterhin für jede dieser Tabellen die jeweiligen Datensätze für den Eintrag auf. Es ist besonders vorteilhaft die Datensätze in dem Versandpaket gemäß ihrer Zugehörigkeit zu den Tabellen anzuordnen. Eine zweckmäßige Anordnung besteht in der Abfolge einer Tabellenidentifikation und den zugehörigen Datensätzen, gegebenenfalls gefolgt von weiteren Tabellenidentifikationen mit zugehörigen Datensätzen. Tabellenidentifikationen und Datensätze können in dieser Abfolge in dem Versandpaket gespeichert und an die Peripherieeinheit übertragen werden.

Gemäß einer besonders vorteilhaften Ausgestaltung der Erfindung kann ein Eintrag durch einen Primärschlüssel identifiziert werden. Der Primärschlüssel kann zur Identifikation der Datensätze des Eintrags in der relationalen Datenbank herangezogen werden. Es ist vorteilhaft, den Primärschlüssel zum Zugriff auf einen Hauptdatensatz des Eintrags zu verwenden, indem der Primärschlüssel als Schlüssel für den Hauptdatensatz herangezogen wird. Zweckmäßigerweise werden Datensatzschlüssel in dafür vorgesehenen Feldern der Datensätze gespeichert.

Es ist besonders vorteilhaft den Primärschlüssel in dem Versandpaket an die Peripheriedatenbank zu übertragen. Die Peripheriedatenbank kann anhand eines empfangenen Primärschlüssels feststellen, ob ein neuer Eintrag in die Tabelle der Peripheriedatenbank eingetragen oder ein bereits bestehender Eintrag ersetzt werden soll. Dazu kann die Peripheriedatenbank in der entsprechenden Tabelle anhand des empfangenen Primärschlüssels ermitteln, ob ein dem Primärschlüssel zugeordneter Hauptdatensatz vorliegt. Falls ein entsprechender Hauptdatensatz in der Peripheriedatenbank bereits vorhanden ist, wird aufgrund des erfindungsgemäßen Übertragungsverfahrens sichergestellt, daß der gesamte Eintrag bereits existiert, d.h. daß alle zugehörigen Datensätze in den unterschiedlichen Tabellen vorhanden sind. Ein vorhandener Eintrag kann nun in der Peripheriedatenbank vollständig ersetzt, d.h. alle zugehörigen Datensätze ausgetauscht werden.

Um im Fall von Übertragungsfehlern eine vollständige Replikation der Zentraldatenbank in der Peripheriedatenbank zu ermöglichen, ist es zweckmäßig eine Datei mit einem Versandpaket bzw. mit mehreren Versandpaketen mehrfach an die Peripheriedatenbank zu übertragen. Eine bevorzugte Ausgestaltung der Erfindung sieht vor, die Abfolge der Übertragung von Versandpaketen bzw. Dateien über ein Warteschlangenmodell zu realisieren. Ein Versandpaket für einen ausgewählten Eintrag kann dazu in eine Warteschlange mit hoher Priorität eingereiht werden. Versandpakete dieser Warteschlange werden priorisiert übertragen. Nach dem Versenden des Versandpakets wird dieses in eine Warteschlange mit niedriger Priorität eingereiht. Versandpakete dieser Warteschlange werden übertragen, wenn keine Versandpakete in der Warteschlange mit hoher Priorität vorhanden sind. Dies kann beispielsweise zu Zeiten geschehen, in denen keine neuen Einträge in der Zentraldatenbank anfallen. Es ist weiterhin möglich die zweite Warteschlange als Ringpuffer auszugestalten, um ein fortlaufendes wiederholtes Senden von Versandpaketen in den Zeiten zu erzielen, in denen keine neuen oder veränderten Einträge in der Zentraleinheit vorliegen.

Eine besonders vorteilhafte Ausgestaltung der Erfindung sieht mehrere Peripheriedatenbanken vor. Ein Versandpaket bzw. eine Datei kann gleichzeitig an mehrere Peripheriedatenbanken übertragen werden. Da das erfindungsgemäße Übertragungsverfahren keinen Rückkanal benötigt, können mehrere Peripheriedatenbanken unabhängig voneinander aktualisiert werden. Jede Peripheriedatenbank fügt die Datensätze von vollständig und korrekt empfangenen Versandpaketen in ihre Tabellen ein. Fehlerhaft empfangene Versandpakete werden von den Peripheriedatenbanken verworfen. Durch das erfindungsgemäße Übertragungsverfahren ist es möglich, daß der Datenbestand der einzelnen Peripheriedatenbanken voneinander abweicht, da in einzelnen Peripheriedatenbanken die Einträge von verworfenen Versandpaketen fehlen können. Jede einzelne Peripheriedatenbank ist jedoch vollständig konsistent und kann fehlerfrei auf alle Datensätze der korrekt empfangenen Einträge zugreifen. Es ist nicht notwendig, daß die Zentraleinheit die Konsistenz und den Datenbestand der einzelnen Peripheriedatenbanken überwacht.

Zur Erhöhung der Sicherheit der Datenübertragung ist es zweckmäßig Versandpakete bzw. Dateien verschlüsselt zu übertragen. Weiterhin können Versandpakete bzw. Dateien mit einem Datenkompressionsverfahren komprimiert werden, um die Übertragungsdauer zu reduzieren. Es ist besonders vorteilhaft die Datenverschlüsselung und die Datenkompression gemeinsam auszuführen. Vorzugsweise werden sich wiederholende Bitfolgen mit bestimmten Codewörtern codiert. Während der Generierung der Codewörter erfolgt eine Verschlüsselung, so daß Komprimierung und Verschlüsselung gemeinsam erfolgen.

Eine erfindungsgemäße Datenverarbeitungsvorrichtung weist eine Zentraleinheit, eine Peripherieeinheit und eine unidirektionale Datenkommunikationseinrichtung zum Übertragen von Daten von der Zentraleinheit zur Peripherieeinheit auf.

Die Zentraleinheit weist weiterhin Datenbankmittel auf, die eine Zentraldatenbank aus mehreren Tabellen speichern. Die Tabellen umfassen jeweils einen oder mehrere Datensätze.

Eine Auswahleinrichtung wählt einen Eintrag in der Zentraldatenbank aus. Anhand der Datensatzschlüssel ermittelt die Zentraleinheit alle Datensätze für den ausgewählten Eintrag und erstellt ein Versandpaket für den ausgewählten Eintrag aus den ermittelten Datensätzen. Die Datenkommunikationseinrichtung überträgt das Versandpaket an die Peripherieeinheit. Die Peripherieeinheit weist Datenbankmittel auf, die Datensätze des Versandpakets in die Tabellen der Peripheriedatenbank einfügen oder ersetzen. Weiterhin kann die Peripherieeinheit eine Ein-/Ausgabevorrichtung aufweisen, um einem Benutzer Zugang zu den Datensätzen der Peripheriedatenbank zu gewähren.

Die Datenbankmittel der Peripherieeinheit können anhand eines empfangenen Primärschlüssels feststellen, ob ein neuer Eintrag in die Tabellen der Peripheriedatenbank eingetragen oder ein bereits bestehender Eintrag ersetzt werden soll. Um das Versenden der Versandpakete bzw. der Dateien zu organisieren, kann die Datenkommunikationseinrichtung zumindest eine Warteschlange aufweisen. Vorzugsweise sind mehrere Warteschlangen mit unterschiedlicher Priorität vorgesehen.

Die Datenkommunikationseinrichtung kann weiterhin eine Datenverschlüsselungsvorrichtung und/oder eine Datenkompressionsvorrichtung aufweisen. Besonders zweckmäßig ist es, eine gemeinsame Datenverschlüsselungs- und Kompressionsvorrichtung zu verwenden.

Um mehrere Peripheriedatenbanken zu aktualisieren, ist es zweckmäßig ein Versandpaket bzw. eine Datei gleichzeitig an die Peripheriedatenbanken zu übertragen. Dies kann durch einen sogenannten Broadcast erfolgen. Eine besonders vorteilhafte Ausgestaltung der Erfindung sieht eine Satelliten- oder TV-Kabelübertragungsvorrichtung als Datenkommunikationseinrichtung vor. Durch eine derart ausgestaltete Datenkommunikationseinrichtung können Daten mit einer hohen Datenübertragungsrate gleichzeitig an eine Vielzahl von Empfängern übertragen werden.

Ein erfindungsgemäßes Verfahren zum Verwalten von zu empfangenden Datenpaketen mit einer fortlaufenden Paketnummer, beginnend mit einer Startnummer bis zu einer Endnummer, erfolgt durch Erzeugen einer Liste von Intervallen, die jeweils einen zusammenhängenden Bereich von bereits empfangenen Paketnummern angeben. Ein Intervall weist zwei Intervallgrenzen zur Angabe des Bereichs der bereits empfangenen Paketnummern auf. Das erfindungsgemäße Verfahren eignet sich besonders zum Verwalten der empfangenen Datenpakete von großen Dateien. Insbesondere bei Multimedia-Anwendungen treten oftmals große Dateien für digitale Bilder oder Filme auf, die zur Übertragung in eine sehr große Anzahl von Datenpakete aufgespalten werden. Nach dem vollständigen Empfang aller zusammengehörenden Datenpakete einer Datei kann diese vom Empfänger wieder zusammengesetzt werden.

Gemäß dem erfindungsgemäßen Verfahren, das insbesondere von einem elektronischen Rechner ausgeführt werden kann, wird nach dem Empfang eines Datenpakets geprüft, ob die Paketnummer des empfangenen Datenpakets den Bereich eines bereits bestehenden Intervalls zusammenhängend erweitert. Eine zusammenhängende Erweiterung eines bereits bestehenden Intervalls liegt beispielsweise vor, wenn die Paketnummer des empfangenen Datenpakets um 1 größer als die obere Intervallgrenze oder um 1 kleiner als die untere Intervallgrenze des Intervalls ist. Für diesen Fall wird die entsprechende Intervallgrenze aktualisiert. Die entsprechende Intervallgrenze erhält dann den Wert der empfangenen Paketnummer. Durch die Aktualisierung der Intervallgrenze wird der Empfang des Datenpakets in der Liste der Intervalle vermerkt.

Falls eine Intervallgrenze aktualisiert wurde, wird geprüft, ob das aktualisierte Intervall mit einem anderen Intervall einen zusammenhängenden Bereich bildet. Da durch die Aktualisierung einer Intervallgrenze der durch das Intervall beschriebene Bereich von bereits empfangenen Paketnummern erweitert wird, ist es möglich, daß durch diese Aktualisierung der erweiterte Bereich unmittelbar an den durch ein anderes Intervall beschriebenen Bereich angrenzt. Da in diesem Fall die beiden Intervalle einen gemeinsamen zusammenhängenden Bereich bilden, können sie durch ein einziges gemeinsames Intervall, dessen Intervallgrenzen den gemeinsamen zusammenhängenden Bereich angeben, beschrieben werden. Durch die Vereinigung der beiden Intervalle zu einem gemeinsamen Intervall wird die Anzahl der Intervalle in der Intervalliste um 1 verringert. Die Vereinigung der beiden Intervalle kann dadurch erfolgen, daß in der Intervalliste ein neues Intervall eingetragen und die beiden vereinigten Intervalle entfernt werden, oder indem die Intervallgrenzen eines der beiden Intervalle entsprechend angepaßt werden und das andere Intervall entfernt wird.

Zweckmäßigerweise wird ein gemeinsames Intervall gebildet, wenn die obere Intervallgrenze eines Intervalls um 1 kleiner als die untere Intervallgrenze eines anderen Intervalls ist. Die untere Intervallgrenze des gemeinsamen Intervalls nimmt dabei den kleineren Wert der unteren Intervallgrenzen der beiden Intervalle und die obere Intervallgrenze des gemeinsamen Intervalls den größeren Wert der oberen Intervallgrenzen der beiden Intervalle an. Falls keine Intervallgrenze aktualisiert wurde, wird ein neues Intervall erzeugt, dessen Intervallgrenzen die Paketnummer des empfangenen Datenpakets sind. Das neue Intervall wird dazu in die Liste der Intervalle aufgenommen. Zweckmäßigerweise ist die Intervalliste als Array ausgebildet, um ein binäres Suchen zu ermöglichen. Selbstverständlich sind auch andere Realisierungen der Intervalliste möglich. Um auf einfache Weise ein Einfügen und Löschen von Intervallen in der Liste zu ermöglichen, ist eine doppelt verkettete Liste vorteilhaft.

Ein neues Intervall wird erfindungsgemäß dann erzeugt, wenn die Paketnummer des empfangenen Datenpakets einen Abstand zu den bereits empfangenen Paketnummern aufweist, der größer als 1 ist. Werden die Pakete in der Reihenfolge ihrer fortlaufenden Paketnummern abgesendet und treten keine Paketvertauschungen und Paketverluste auf, wird immer nur ein bereits bestehendes Intervall aktualisiert, d.h. seine obere Intervallgrenze erhält den Wert der Paketnummer des zuletzt empfangenen Datenpakets. Bei einem Verlust eines Datenpakets entstehen Lücken in den Paketnummern der empfangenen Pakete, wodurch neue Intervalle gebildet werden. Falls ein fehlendes Paket verspätet eintritt (Paketvertauschung), können die Lücken zwischen den Intervallen wieder geschlossen werden.

Für jedes empfangene Datenpaket werden die bereits bestehenden Intervalle geprüft, gegebenenfalls Intervallgrenzen aktualisiert und Intervalle vereinigt oder neue Intervalle erzeugt.

Zweckmäßigerweise wird festgestellt, daß alle zu empfangenden Datenpakete empfangen wurden, wenn die Liste nur ein Intervall aufweist, dessen Intervallgrenzen die Startnummer und die Endnummer der zu empfangenden Datenpakete sind. In diesem Fall kann eine Datei aus den empfangenen Datenpaketen vollständig zusammengesetzt werden.

Das erfindungsgemäße Verfahren spart Speicherplatz, da keine Liste gespeichert werden muß, in der alle Datenpakete einzeln aufgeführt werden. Erfindungsgemäß werden nur die Intervallgrenzen von zusammenhängenden Bereichen der Paketnummern gespeichert. Durch das Vereinigen von Intervallen kann weiterhin der Speicherplatzbedarf reduziert werden. Weiterhin ist das erfindungsgemäße Verfahren sehr effizient und spart Rechenzeit in dem Empfangsrechner, der dadurch für andere Aufgaben zur Verfügung steht. Um festzustellen, ob alle Datenpakete eingegangen sind, ist es erfindungsgemäß nicht erforderlich, eine Liste mit Einträgen für alle Datenpakete zu überprüfen. Das erfindungsgemäße Verfahren ermöglicht es, den Empfang aller Datenpakete durch ein Überprüfen der Intervalliste zu ermitteln. Wenn diese Liste nur ein Intervall mit den entsprechenden Intervallgrenzen aufweist, kann auf einfache Weise festgestellt werden, daß die zu empfangende Datei vollständig ist.

Das erfindungsgemäße Verfahren eignet sich besonders zur Verwaltung der Datenpakete von sehr großen Dateien, die für die Übertragung in einige Tausend oder Zehntausend Datenpakete aufgeteilt werden. Weiterhin ist das erfindungsgemäße Verfahren besonders für Übertragungskanäle geeignet, in denen Übertragungsfehler blockweise auftreten und bevorzugt aufeinanderfolgende Datenpakete gestört werden. In diesem Fall entsteht nur eine geringe Anzahl von Intervallen und das Verfahren arbeitet besonders effektiv.

In dem erfindungsgemäßen Datenkommunikationssystem kann das Verfahren zum Verwalten von zu empfangenden Datenpaketen beispielsweise in einer Empfangsvorrichtung der Peripherieeinheit ausgeführt werden. Das Verfahren kann vorteilhafterweise zum Empfang von Versandpaketen oder von Dateien eingesetzt werden. Im Fall von Paketverlusten können die bereits empfangenen Datenpakete bis zu einer erfolgreichen wiederholten Übertragung des Versandpakets oder der Datei gespeichert werden. Es ist zweckmäßig die Intervalliste bis zur erfolgreichen Übertragung aller Datenpakete zu speichern. Fehlende Datenpakete eines früheren Übertragungsversuchs können einfach anhand der Intervalliste ermittelt und mit den entsprechenden Datenpaketen der wiederholten Übertragung ergänzt werden. Auf diese Weise ist es möglich, trotz relativ hoher Paketverlustraten, auch große Dateien vollständig zu übertragen.

In einer besonders vorteilhaften Ausgestaltung der Erfindung ist die Liste der Intervalle nach den Intervallgrenzen sortiert. Die Liste der Intervalle kann beispielsweise aufsteigend oder abfallend mit den Paketnummern geordnet sein. Durch das Sortieren der Liste ist es nach der Aktualisierung einer Intervallgrenze nur erforderlich zu prüfen, ob das aktualisierte Intervall mit einem unmittelbar benachbarten Intervall der sortierten Liste einen zusammenhängenden Bereich bildet. Zweckmäßigerweise wird die veränderte Intervallgrenze des aktualisierten Intervalls mit der entsprechenden Intervallgrenze eines benachbarten Intervalls der sortierten Liste verglichen. Auf diese Weise ist es besonders einfach möglich festzustellen, ob ein Intervall mit einem anderen Intervall einen zusammenhängenden Bereich bildet.

Es ist besonders zweckmäßig die Liste der Intervalle mittels einer binären Suche zu durchsuchen, um zu prüfen, ob die Paketnummer des empfangenen Datenpakets den Bereich eines bereits bestehenden Intervalls zusammenhängend erweitert. Eine binäre Suche ist besonders effizient durchzuführen und kann mit einer minimalen Anzahl von Operationen ausgeführt werden. Auf diese Weise kann der Rechenaufwand bei der Verwaltung von sehr großen Intervalllisten weiter reduziert werden.

Es ist besonders vorteilhaft, wenn vom Sender der Datenpakete ein Informationspaket gesendet wird, das die Startnummer und die Endnummer der zu empfangenden Datenpakete angibt. Dieses Informationspaket kann auch mehrfach gesendet werden, um sicherzustellen, daß das Informationspaket auf der Übertragungsstrecke nicht verlorengeht. Die Startnummer und die Endnummer der zu empfangenden Datenpakete kann aber auch auf andere Weise ermittelt werden.

Das erfindungsgemäße Verwaltungsverfahren kann auch zur Verwaltung einer Vielzahl von zu empfangenden Dateien mit fortlaufenden Dateinummern herangezogen werden. Dies ist besonders vorteilhaft, wenn eine sehr große Zahl von Dateien vom Empfänger empfangen und verwaltet werden muß. In dem oben beschriebenen Verfahren werden dazu lediglich die Paketnummern durch Dateinummern ersetzt.

Eine Datenverarbeitungsvorrichtung zum Verwaltung von zu empfangenden Datenpaketen mit einer fortlaufenden Paketnummer beginnend mit einer Startnummer bis zu einer Endnummer weist Listenverwaltungsmittel zum Verwalten einer Liste von Intervallen, Empfangsmittel zum Empfang von Datenpaketen und Prüfmittel auf. Die Prüfmittel prüfen, ob die Paketnummer eines empfangenen Datenpakets den Bereich eines bestehenden Intervalls zusammenhängend erweitert, wobei die Listenverwaltungsmittel für diesen Fall die entsprechende Intervallgrenze des Intervalls aktualisieren und prüfen, ob das aktualisierte Intervall mit einem anderen Intervall einen zusammenhängenden Bereich bildet. In diesem Fall werden die beiden Intervalle zu einem gemeinsamen Intervall vereinigt. Für den Fall, daß keine Intervallgrenze aktualisiert wurde, erzeugen die Listenverwaltungsmittel ein neues Intervall mit der Paketnummer des empfangenen Datenpakets als Intervallgrenzen.

Zweckmäßigerweise sortieren die Listenverwaltungsmittel die Liste der Intervalle nach den Intervallgrenzen. Die Prüfmittel können die Liste der Intervalle mittels einer binären Suche durchsuchen.

Es ist weiterhin vorteilhaft, wenn Entscheidungsmittel vorgesehen sind, die feststellen, daß alle zusammengehörenden Datenpakete empfangen wurden, wenn die Liste nur ein Intervall aufweist, dessen eine Intervallgrenze mit der Startnummer und deren andere Intervallgrenze mit der Endnummer der zu empfangenen Datenpakete übereinstimmen.

In dem Sender des erfindungsgemäßen Datenkommunikationssystems ist es erforderlich eine Vielzahl von zu sendenden Dateien zu verwalten, die alle von der Zentraleinheit an eine oder mehrere Peripherieeinheiten zu übertragen sind. Diese Dateien können beispielsweise jeweils ein oder mehrere Versandpakete der Zentraldatenbank aurweisen, die zur Replikation der Zentraldatenbank über die Datenkommunikationsverbindung übertragen werden sollen.

Ein Verfahren zum Verwalten einer Mehrzahl von zu sendenden Dateien, die durch eine Liste der zu sendenden Dateien angegeben wird, legt für jede zu sendende Datei in der Sendeliste einen Eintrag in einem binären Baum an. Das Versenden der Dateien erfolgt durch eine Sendewarteschlange. In dem Eintrag in dem binären Baum können Informationen über die zu sendende Datei gespeichert werden. Beispielsweise kann in dem Eintrag der Dateiname, die Datengröße und/oder ein Verweis auf die Datei selbst gespeichert werden. Gemäß dem erfindungsgemäßen Verfahren wird nach Empfang einer neuen Sendeliste ein zweiter binärer Baum angelegt. Der zweite Baum wird mit dem aktuellen Sendebaum verglichen und es werden diejenigen Dateien ermittelt, die in der ursprünglichen Sendeliste aufgeführt waren und in der neuen Sendeliste fehlen. Dies kann insbesondere durch einen Vergleich der Knoten der beiden binären Bäume erfolgen. Durch den Vergleich von binären Bäumen ist es möglich, Unterschiede in den korrespondierenden Listen mit einer minimalen Anzahl von Operationen zu ermitteln.

Erfindungsgemäß werden die Einträge der fehlenden Dateien aus der Sendewarteschlange entfernt. Da diese Dateien in der neuen Sendeliste nicht mehr aufgeführt sind, ist es nicht weiter erforderlich diese an die Peripherieeinheit zu übertragen.

Der zweite Baum wird fortan als aktueller Sendebaum verwendet. Bei Empfang einer erneuten Sendeliste kann das Verfahren mit diesem Baum fortgesetzt werden.

Das erfindungsgemäße Verfahren ermöglicht es, sehr effizient auf eine Veränderung einer sehr großen Liste von zu sendenden Dateien zu reagieren, indem die Änderung der Sendeliste ermittelt und die entsprechenden Dateien aus der Sendewarteschlange entfernt werden. Das Verfahren kann vorzugsweise von einem elektronischen Rechner ausgeführt werden.

In einem weiteren Verfahren zum Verwalten einer Mehrzahl von zu sendenden Dateien wird für jede zu sendende Datei der Sendeliste ein Sendeeintrag angelegt, in dem Informationen über die zu sendende Datei gespeichert werden. Die Sendeeinträge werden in Form eines binären Baums, dessen Knoten jeweils einen Sendeeintrag aufweisen, gespeichert. Sendeeinträge werden aus dem Baum ausgewählt, die zugeordnete Datei gesendet und der Sendeeintrag aus dem Sendebaum entfernt.

Nach dem Einlesen einer neuen Sendeliste wird eine Datei aus der Sendeliste ausgewählt. Der Eintrag der ausgewählten Datei in dem aktuellen Sendebaum wird ermittelt. Falls der entsprechende Sendeeintrag gefunden wurde, wird der Sendeeintrag aus dem aktuellen Sendebaum entfernt.

Für die ausgewählte Datei wird in einem zweiten binären Baum ein neuer Sendeeintrag in dem ebenfalls Informationen über die zu sendende Datei gespeichert werden, angelegt. Durch das Anlegen des neuen Sendeeintrags in dem zweiten Baum wird berücksichtigt, daß die entsprechende Datei in der neuen Sendeliste aufgeführt ist.

Das Verfahren wird mit dem Auswählen einer bisher noch nicht ausgewählten Datei aus der Sendeliste so lange fortgesetzt, bis alle Dateien aus der Sendeliste ausgewählt wurden. Nach dem Abarbeiten der Sendeliste wurden alle Einträge für in der Sendeliste aufgeführte Dateien aus dem Sendebaum entfernt und neue Sendeeinträge in dem zweiten binären Baum angelegt.

Durch die verbliebenen Einträge im Sendebaum können diejenigen Dateien einfach identifiziert werden, die in der ursprünglichen Sendeliste aufgeführt waren, jedoch in der neuen Sendeliste fehlen. Diese Dateien können nun beispielsweise aus einer Sendewarteschlange entfernt und/oder gelöscht werden. Die verbleibenden Einträge des Sendebaums können nun gelöscht werden. Weiterhin kann auch der aktuelle Sendebaum vollständig entfernt werden. Das Verfahren kann bei Empfang einer neuen Sendeliste mit dem zweiten Baum als aktueller Sendebaum fortgesetzt werden.

In einer besonders vorteilhaften Ausgestaltung der Erfindung werden die binären Bäume als balancierte Binärbäume aufgebaut. Durch das Anlegen des Sendebaums und/oder des zweiten Baums als balancierter Binärbaum wird verhindert, daß der oder die Bäume entarten. Ein entarteter Baum, der beispielsweise überwiegend die Form einer Liste aufweist, verliert seine vorteilhaften Eigenschaften, wie beispielsweise die Möglichkeit einer optimalen Suche nach einem Element oder Knoten des Baums. Zweckmäßigerweise erfolgt in dem Sendebaum und/oder dem zweiten Baum eine binäre Suche nach einem Eintrag. Durch eine binäre Suche in einem Baum können Einträge bzw. Knoten in den Baum mit einer besonders geringen Anzahl von Suchoperationen durchgeführt werden. In jedem Knoten des Baums wird der zu suchende Eintrag mit den in dem Knoten abgespeicherten Eintrag verglichen. Abhängig von dem Ergebnis dieser Vergleichsoperation wird die Suche in dem entsprechenden Zweig bzw. Teilbaum fortgesetzt. Dabei erweist es sich als besonders vorteilhaft, wenn der Baum gleichmäßig aufgebaut, d.h. balanciert ist.

Eine besonders vorteilhafte Ausgestaltung der Erfindung sieht vor, daß eine neue Sendeliste eingelesen wird, wenn eine Nachricht empfangen wird, die angibt, daß eine veränderte Sendeliste vorliegt. Durch das Eintreffen der Nachricht wird dem Verfahren signalisiert, daß Änderungen in der Sendeliste vorgenommen wurden. Das erfindungsgemäße Verfahren ermittelt nach dem Einlesen der neuen Sendeliste diejenigen Dateien, die in der ursprünglichen Sendeliste angegeben waren und in der neuen Sendeliste fehlen. Diese Dateien können dann aus einer Sendewarteschlange entfernt oder in einer anderen Weise vor dem Versenden an die Peripherieeinheit bewahrt werden. Neu in der Sendeliste aufgeführte Dateien können durch das erfindungsgemäße Verfahren automatisch in einer Sendewarteschlange eingereiht oder in sonstiger Weise zum Versenden vorbereitet und/oder bereitgehalten werden. Zweckmäßigerweise wird das Verfahren zum Verwalten einer Mehrzahl von zu sendenden Dateien von einem elektronischen Rechner oder Mikrocomputer ausgeführt.

In diesem Fall kann die Nachricht von dem Betriebssystem des elektronischen Rechners abgesendet werden, wenn beispielsweise eine Änderung in einem Teil des Dateisystems des Rechners auftritt. Dies kann z.B. dann erfolgen, wenn neue Dateien in einem Sendeverzeichnis abgespeichert werden. Nach Empfang der Nachricht und dem Einlesen der Sendeliste kann das erfindungsgemäße Verfahren auf die Änderungen in dem Dateisystem reagieren, ohne daß dieses ständig von dem Verfahren selbst überwacht werden muß.

Das Entfernen des Sendeeintrags aus dem Sendebaum und das Anlegen eines neuen Sendeeintrags in dem zweiten Baum kann vorteilhafterweise durch das Verändern von Verweisen auf die Knoten der Bäume erfolgen. Da Baumstrukturen in einem Speicherbereich eines elektronischen Rechners in der Regel durch das Speichern von Verweisen auf Vorgängerknoten und/oder Nachfolgeknoten realisiert werden, ist es besonders einfach und zweckmäßig einen Eintrag bzw. Knoten aus einem Baum zu entfernen und in einem anderen Baum neu anzulegen, indem die entsprechenden Verweise oder Zeiger (Pointer) verändert werden.

Zweckmäßigerweise erfolgt das Versenden der Dateien durch eine Sendewarteschlange. Die Sendewarteschlange kann durch das Speichern von Verweisen auf die Knoten der nachfolgend zu versendenden Dateien direkt in den Sendeeinträgen des Sendebaums gebildet werden. Zusätzlich zu den Verweisen, die die Struktur des Baums festlegen, ist es möglich, weitere Verweise in dem entsprechenden Speicherbereich des elektronischen Rechners zu speichern, durch die die Reihenfolge festgelegt wird, in der die zu sendenden Dateien übertragen werden sollen. Durch Speichern dieser Verweise in den Baumknoten ist es sehr einfach und zweckmäßig eine Sendewarteschlange, insbesondere ein FiFo, zu realisieren. Dies ist besonders vorteilhaft, da beim Entfernen eines Eintrags bzw. Knotens aus dem Sendebaum zugleich auch die Sendewarteschlange entsprechend angepaßt werden kann. Das Löschen der Sendeeinträge für Dateien, die in der ursprünglichen Sendeliste angegeben waren und in der neuen Sendeliste fehlen, kann zweckmäßigerweise durch das Verändern der Verweise auf Knoten erfolgen.

Durch das erfindungsgemäße Verfahren zum Verwalten einer Mehrzahl von zu sendenden Dateien kann eine sehr große Anzahl von Dateien verwaltet werden. Da für jede zu sendende Datei ein Sendeeintrag in einer Baumstruktur angelegt wird, können Änderungen in Sendelisten sehr effizient ermittelt und auf neue bzw. fehlende Dateien in den Sendelisten mit minimalem Rechenaufwand reagiert werden. Die zu sendenden Dateien können so lange durch die Baumstruktur effizient verwaltet werden, bis sie von einer Sendevorrichtung an den entsprechenden Empfänger abgesendet wurden. Nach dem Absenden der Dateien können diese aus den Datenstrukturen des erfindungsgemäßen Verfahrens entfernt werden. Durch die baumförmige Datenstruktur des erfindungsgemäßen Verfahrens können effiziente Suchverfahren zum Ermitteln von Einträgen in dem Baum herangezogen werden. Weiterhin ist es möglich, eine Sendewarteschlange zum Verwalten der Reihenfolge der abzusendenden Dateien durch das Speichern von Verweisen auf Knoten der nachfolgend zu versendenden Dateien vorzusehen, wodurch sehr kompakte Datenstrukturen geschaffen werden können, die Speicherplatz und Rechenzeiten einsparen.

Eine Datenverarbeitungsvorrichtung zum Verwalten einer Mehrzahl von zu sendenden Dateien weist Empfangsmittel zum Einlesen der Sendeliste und Binärbaumverwaltungsmittel zum Anlegen und Verwalten von binären Bäumen auf. Die Knoten des binären Baums weisen jeweils einen Sendeeintrag für eine zu sendende Datei auf, in dem Informationen über die zu sendende Datei gespeichert sind. Sendemittel wählen einen Sendeeintrag aus einem Sendebaum aus, senden die zugeordnete Datei an den entsprechenden Empfänger und entfernen den Sendeeintrag aus dem Sendebaum.

Nach Empfang einer neuen Sendeliste wählen die Binärbaumverwaltungsmittel eine Datei aus der neuen Sendeliste aus, suchen den entsprechenden Sendeeintrag der ausgewählten Datei in dem aktuellen Sendebaum und entfernen den gefundenen Sendeeintrag für die ausgewählte Datei, falls dieser gefunden wurde. Die Binärbaumverwaltungsmittel legen einen neuen Sendeeintrag für die ausgewählte Datei in einem zweiten binären Baum an.

Nachdem alle Dateien der neuen Sendeliste ausgewählt und verarbeitet wurden, ermitteln die Binärbaumverwaltungsmittel die verbliebenen Sendeeinträge des Sendebaums. Diese verbliebenen Sendeeinträge kennzeichnen diejenigen Dateien, die in der ursprünglichen Sendeliste vorgesehen waren, in der neue Sendeliste aber nicht mehr angegeben sind. Die Datenverarbeitungsvorrichtung kann die zugeordneten Dateien der verbliebenen Sendeeinträge löschen und/oder das Absenden dieser Dateien durch die Sendemittel verhindern bzw. unterbrechen.

Nach der Auswertung und Verarbeitung der verbliebenen Sendeeinträge können diese in dem Sendebaum gelöscht und der zweite Baum fortan als aktueller Sendebaum verwendet werden. Nach dem Empfang einer weiteren Sendeliste können die Binärbaumverwaltungsmittel die erfindungsgemäße Auswertung der neuen Sendeliste anhand dieses neuen Sendebaums durchführen.

Weitere Besonderheiten und Vorzüge des erfindungsgemäßen Datenkommunikationssystems können den Figuren schematisch und der folgenden Beschreibung bevorzugter Ausführungsbeispiele entnommen werden. Es zeigen:

Fig. 1 ein Ausführungsbeispiel des erfindungsgemäßen Datenkommunikationssystems;

Fig. 2 eine Darstellung zur Erläuterung des Verfahrens zum Übertragen von relationalen Datenbanken;

Fig. 3 eine Darstellung zur Erläuterung von Versandpaketen und Dateien;

Fig. 4 eine Darstellung zur Erläuterung des Verfahrens zum Verwalten von zu empfangenden Datenpaketen;

Fig. 5 ein Ausführungsbeispiel einer Datenverarbeitungsvorrichtung zum Verwalten von zu empfangenden Datenpaketen; und

Fig. 6 ein Ausführungsbeispiel einer Datenverarbeitungsvorrichtung zum Verwalten einer Mehrzahl von zu sendenden Dateien.

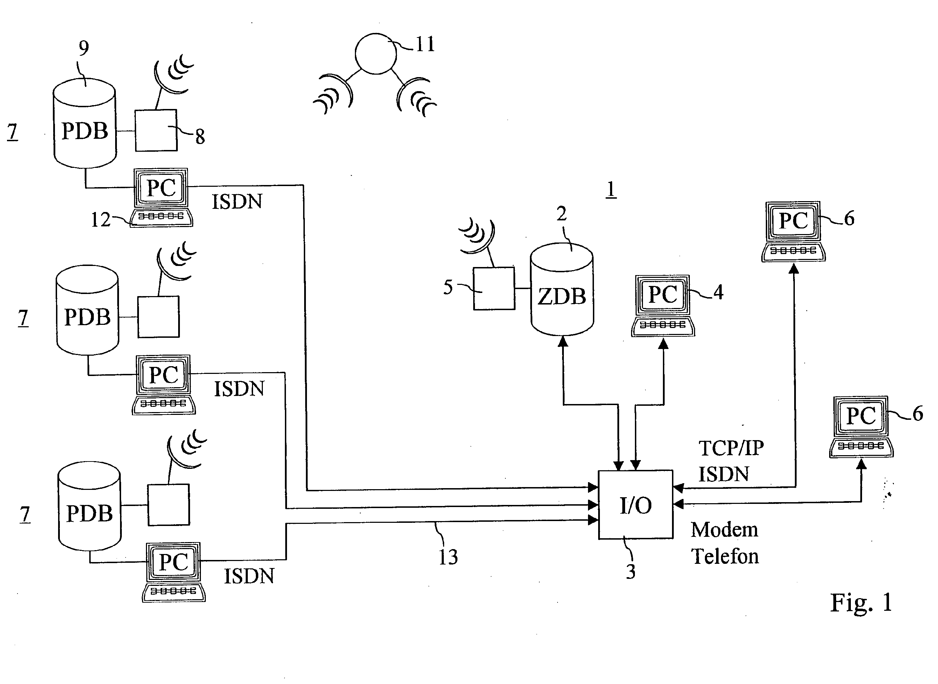

Die Fig. 1 zeigt ein Ausführungsbeispiel eines erfindungsgemäßen Datenkommunikationssystems. In einer Zentraleinheit 1 ist eine Zentraldatenbank 2 vorgesehen. In der Zentraldatenbank 2 wird eine relationale Datenbank mit einer Vielzahl von Tabellen, die jeweils einen oder mehrere Datensätze umfassen, gespeichert.

In dem gezeigten Ausführungsbeispiel handelt es sich um eine Produktdatenbank, in der Informationen über zu verkaufende Artikel, wie z.B. Kraftfahrzeuge, gespeichert sind. In den Tabellen der relationalen Datenbank sind dazu die Daten der einzelnen Fahrzeuge abgelegt. Bei den Fahrzeugen kann es sich um Neuwagen, gebrauchte Fahrzeuge, Fahrzeugteile und/oder Unfallfahrzeuge handeln.

Zur Konfiguration und zur Verwaltung der Zentraldatenbank 2 ist weiterhin eine Arbeitsplatzstation 4 vorgesehen. Über diese Arbeitsplatzstation 4, beispielsweise ein entsprechend ausgestatteter Personal Computer, kann ein Datenbankverwalter zentral die Datensätze der relationalen Datenbank verwalten und pflegen. Der Datenbankverwalter kann neue Datensätze, die neue Artikel betreffen, hinzufügen, Korrekturen an bereits bestehenden Datensätzen vornehmen und diese beispielsweise nach einem erfolgreichen Verkauf eines Fahrzeugs aus der Datenbank entfernen.

In dem gezeigten Ausführungsbeispiel sind weitere Arbeitsplatzstationen 6 vorgesehen, die beispielsweise über ein LAN-, eine TCP/IP-, eine ISDN- und/oder eine Modemverbindung mit einer IO-Vorrichtung 3 verbunden sind. Über die Arbeitsplatzstationen 6 können die Anbieter der zu verkaufenden Artikel neue Datensätze in die Zentraldatenbank 2 eingeben. Durch die flexible Anbindung der Arbeitsplatzstationen 6 kann dies beispielsweise über das Internet oder eine Modemverbindung direkt von den Örtlichkeiten der Anbieter der Waren aus erfolgen. Die Anbieter können die entsprechenden Daten zu ihren Artikeln über große Entfernungen zu der Zentraleinheit 1 übermitteln. Diese Daten können beispielsweise die Beschreibung eines Unfallfahrzeugs mit Fahrzeugtyp, Baujahr, Kilometerleistung und einem Bericht über die Schäden an dem Fahrzeug umfassen. Weiterhin ist es möglich, digitalisierte Fotos oder Filme über den zu veräußernden Artikel an die Zentraldatenbank 2 zu übertragen. Diese Fotos können beispielsweise die beschädigten Teile eines Unfallfahrzeugs darstellen. In einer weiteren möglichen Anwendung können auch digitalisierte Fotos und Filme von Immobilien in der Zentraldatenbank 2 abgelegt werden.

Insbesondere durch das Speichern von digitalisierten Fotos und/oder Filmen in der Zentraldatenbank 2 können sehr große Datenmengen entstehen, die von einer Datenkommunikationseinrichtung 10 zu einer Peripherieeinheit 7 übertragen werden müssen.

Zur Übertragung der Daten von der Zentraldatenbank 2 zu einer Peripheriedatenbank 9 ist deshalb eine hohe Datenübertragungsrate notwendig. Da die Übertragung der Daten zur Replikation der Zentraldatenbank 2 ausschließlich von der Zentraleinheit 1 zur Peripherieeinheit 7 erfolgt, können unidirektionale Datenkommunikationseinrichtungen 10 mit hoher Bandbreite wie Satelliten- oder TV-Kabelübertragungseinrichtungen 5, 8 eingesetzt werden. Die Daten der Zentraldatenbank 2 werden beispielsweise von einer Satellitensendeanlage 5 zu einem Satelliten 11 (Transponder), und von diesem zu einer Satellitenempfangsanlage 8 übertragen. In der Peripherieeinheit 7 werden die empfangenen Datensätze in die Tabellen der Peripheriedatenbank 9 eingefügt bzw. veränderte Datensätze ersetzt. Insbesondere durch Verwendung eines Satellitenübertragungssystems ist es möglich die Daten der Zentraldatenbank 2 gleichzeitig an mehrere Peripherieeinheiten 7 bzw. deren Peripheriedatenbanken 9 zu übertragen, d.h. einen Broadcast der Daten auszuführen.

Jede Peripherieeinheit 7 empfängt die ausgesendeten Datensätze und repliziert die Zentraldatenbank 2 unabhängig von den anderen Peripherieeinheiten 7. Im Falle von Übertragungsfehlern kann der Empfang von Datensätzen einzelner Peripherieeinheiten 7 gestört sein, so daß einzelne Peripheriedatenbanken 9 keine vollständige Kopie der Zentraldatenbank 2 besitzen und die Peripheriedatenbanken 9 voneinander abweichen können. Durch das erfindungsgemäße Verfahren ist jedoch sichergestellt, daß jede Peripheriedatenbank 9 eine konsistente Teilkopie der Zentraldatenbank 2 aufweist und ein vollständiger Zugriff auf alle Datensätze der korrekt empfangenen Einträge möglich ist.

Die Benutzer des Systems können auf die Datensätze der Peripheriedatenbank 9 über Arbeitsplatzstationen 12 zugreifen. Da jeder Benutzer auf eine lokale Kopie der zentralen Datenbank zugreift, ist eine Verarbeitung der Daten in den Peripheriedatenbanken 9 ohne Wartezeiten für die Übertragung der Daten möglich. Dies ist insbesondere von Vorteil, wenn ein Benutzer auf seiner Arbeitsplatzstation 12 auf große Datenmengen wie Multimediadaten zugreift.

Durch das erfindungsgemäße Datenkommunikationssystem ist es möglich, daß auch sehr große Multimedia-Datenbanken auf den Benutzerrechnern 12 ohne störende Verzögerungen und Wartezeiten zur Verfügung stehen. Ein Benutzer kann beispielsweise auf dem Bildschirm seiner Arbeitsplatzstation 12 in schneller Abfolge digitale Fotos oder Filme betrachten. Weiterhin ist es möglich, daß sehr viele Benutzer auf die Daten zugreifen, ohne daß es zu gegenseitigen Beeinträchtigungen kommt. Durch die laufende Übertragung der Daten von der Zentraleinheit 1 zu den Peripherieeinheiten 7 können die Datensätze der Datenbanken 9 ständig aktualisiert werden. Dies ermöglicht es, eine laufende Anpassung der Datensätze der Peripheriedatenbanken 9 vorzunehmen und somit häufig wechselnde Artikel zu vertreiben.

In dem in Fig. 1 gezeigten Ausführungsbeispiel ist weiterhin ein ISDN-Rückkanal 13 von der Peripherieeinheit 7 zu der Zentraleinheit 1 dargestellt. Es sei darauf hingewiesen, daß dieser Rückkanal 13 nicht für das erfindungsgemäße Verfahren zum Übertragen der Daten der Zentraldatenbank 2 notwendig ist. Über den Rückkanal 13 können beispielsweise Kaufangebote von der Arbeitssplatzstation 12 des Benutzers zur Zentraleinheit 1 oder den Arbeitsplatzstationen 6 des Anbieters übertragen werden. Dabei ist es nicht erforderlich, daß der Rückkanal 13 ständig besteht. Ein Benutzer kann über einen längeren Zeitraum auf seiner Arbeitsplatzstation 12 Zugriffe auf Einträge der Peripheriedatenbank 9 vornehmen. Nachdem er einen interessanten Eintrag in der Peripheriedatenbank 9 gefunden hat und den entsprechenden Artikel erwerben möchte, kann er ein Angebot für den Ankauf des Artikels über den Rückkanal 13 absenden. Selbstverständlich kann der Rückkanal 13 auch über andere Übertragungseinrichtungen, wie beispielsweise das Internet, erfolgen.

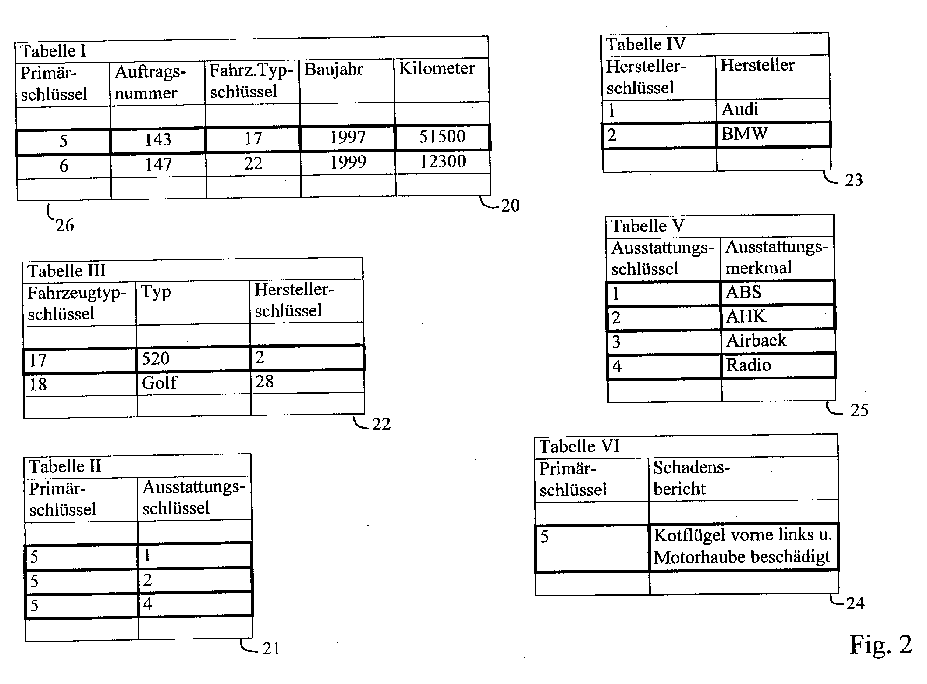

Die Fig. 2 zeigt eine Darstellung zur Erläuterung des erfindungsgemäßen Verfahrens zum Übertragen von relationalen Datenbanken. Die dargestellte relationale Datenbank zur Speicherung der Daten von Unfallfahrzeugen umfaßt die Datenbanktabellen 20 bis 25.

In der Fahrzeugtabelle 20 (Tabellen-ID I) sind die Hauptdatensätze der Fahrzeuge gespeichert. Über einen Primärschlüssel 26 kann ein Eintrag für ein Fahrzeug identifiziert werden. In der Fahrzeugtabelle 20 weist ein Datensatz für ein Fahrzeug den Primärschlüssel 26, eine Auftragsnummer, einen Schlüssel für den Fahrzeugtyp, das Baujahr des Fahrzeugs und dessen Kilometerleistung auf.

Über den Fahrzeugtypschlüssel kann in der Fahrzeugtyptabelle 22 (Tabellen-ID III) der Typ des Fahrzeugs und ein Herstellerschlüssel ermittelt werden. Der in der Fahrzeugtyptabelle 22 gespeicherte Herstellerschlüssel verweist auf den entsprechenden Datensatz des Herstellers in der Herstellertabelle 23 (Tabellen-ID IV).

In einer Fahrzeugausstattungstabelle 21 (Tabellen-ID II) sind für die Fahrzeuge ein Datensatz für jedes Ausstattungsmerkmal des Fahrzeugs gespeichert. Der Zugriff auf die Datensätze der Fahrzeugausstattungstabelle erfolgt über den Primärschlüssel des Fahrzeugeintrags. In der zweiten Spalte der Fahrzeugausstattungstabelle ist für jeden Datensatz ein Ausstattungsschlüssel abgelegt, der auf die entsprechenden Datensätze einer allgemeinen Ausstattungstabelle 25 (Tabellen-ID V) verweist. Da jedes Fahrzeug eine Vielzahl von Ausstattungsmerkmalen aufweisen kann, sind in der Fahrzeugausstattungstabelle 25 mehrere Datensätze für ein Fahrzeug vorgesehen.

In einer Schadenstabelle 24 (Tabellen-ID VI) ist für jedes Fahrzeug ein Datensatz mit einem Schadensbericht vorgesehen. In dem Schadensbericht können die Schäden an einem Unfallfahrzeug genauer beschrieben werden.

Das in Fig. 2 gezeigte Beispiel dient ausschließlich der Erläuterung des erfindungsgemäßen Verfahrens zum Übertragen von Datenbanken. Selbstverständlich ist es möglich eine andere Anordnung von Tabellen mit unterschiedlichen Datensätzen zum Speichern der Informationen für einen Eintrag in der Datenbank vorzusehen.

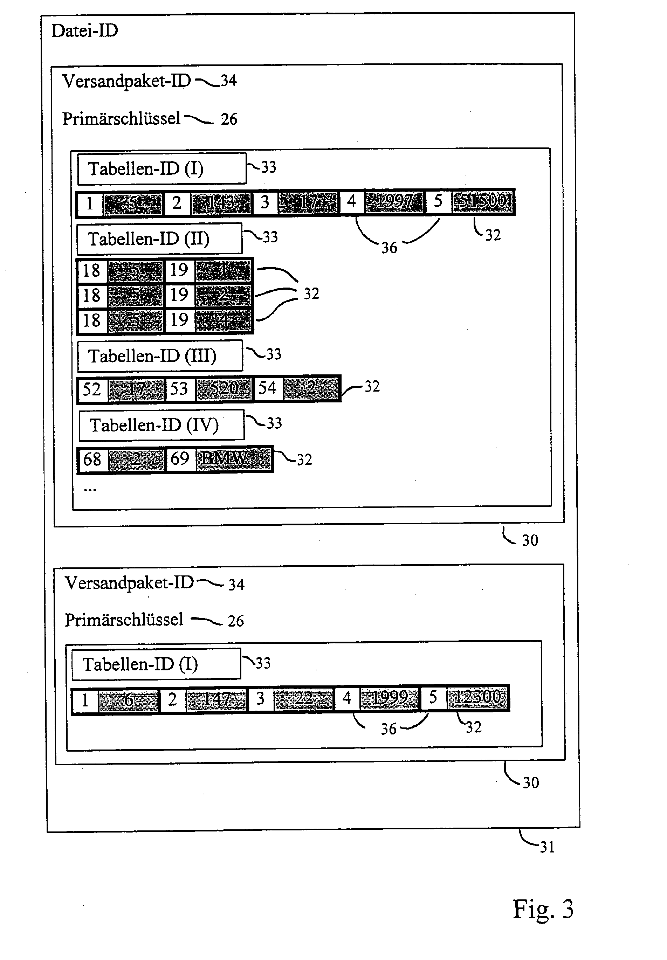

Gemäß dem erfindungsgemäßen Verfahren werden für einen ausgewählten Eintrag alle Datensätze der Tabellen 20 bis 25 anhand der Datensatzschlüssel ermittelt und in einem Versandpaket 30 zusammengestellt. In dem gezeigten Beispiel werden somit alle fett umrandeten Datensätze für den durch den Primärschlüssel "5" ausgewählten Eintrag ermittelt. In dem Versandpaket werden alle diese Datensätze in einer bestimmten, vorgegebenen Reihenfolge abgespeichert. Ein möglicher Aufbau eines Versandpaketes 30 wird unter Bezugnahme auf Fig. 3 erläutert.

Da alle zusammengehörenden Daten für einen ausgewählten Eintrag in einem einzigen Versandpaket 30 an die Peripheriedatenbank 9 übertragen werden, kann dort eine vollständige Rekonstruktion des Eintrags durch Einfügen der Datensätze des Versandpakets in die Tabellen der Peripheriedatenbank 9 erfolgen. Da ein Versandpaket entweder vollständig von der Peripherieeinheit 7 empfangen wird, oder aufgrund von Übertragungsfehlern verlorengeht, umfaßt die Peripheriedatenbank 9 immer einen vollständigen Satz aller Datensätze der erfolgreich übertragenen Einträge. Dies ermöglicht einen vollständigen Zugriff des Arbeitsplatzrechners 12 auf die Datensätze von korrekt empfangenen Einträgen, d.h. die Peripheriedatenbank befindet sich immer in einem konsistenten Zustand. Im Gegensatz dazu können bei herkömmlichen Übertragungsverfahren inkonsistente Datenbankzustände auftreten, wenn beispielsweise die Tabellen der relationalen Datenbank einzeln übertragen werden.

Um im Falle von Übertragungsfehlern alle neuen Einträge in der Zentraldatenbank 2 an die Peripheriedatenbank 9 sicher zu übertragen, ist es vorteilhaft die Versandpakete der Einträge mehrfach zu senden. Im Falle von Übertragungsstörungen beim ersten Senden können die Peripheriedatenbanken 9 die Datensätze von gestörten Versandpaketen eventuell bei der Wiederholung der Datenübertragung empfangen. Auch in diesem Fall ist es erfindungsgemäß vorgesehen, daß alle Datensätze eines Eintrags in einem Versandpaket gemeinsam übertragen und gemeinsam in die Tabellen der Peripheriedatenbank 9 eingefügt werden, um die Konsistenz der Peripheriedatenbank 9 sicherzustellen.

Die Fig. 3 zeigt ein Beispiel für ein Dateiformat zur Übertragung von Versandpaketen von der Zentraleinheit 1 zur Peripherieeinheit 7. Die Dateien sind so aufgebaut, daß sie immer komplette Datenstrukturen von Versandpaketen und nicht nur einzelne Datensätze enthalten. Damit soll gewährleistet werden, daß logisch zusammenhängende Daten auch immer zusammen übertragen werden.

In dem in Fig. 3 gezeigten Beispiel besteht eine Datei 31 aus einer Abfolge von Versandpaketen 30, die durch eine Versandpaketidentifikationsnummer 34 gekennzeichnet sind. Ein Versandpaket 30 weist weiterhin einen Primärschlüssel 26 und eine Abfolge von Tabellen auf. Jede Tabelle wird durch eine Tabellenidentifikationsnummer 33 gekennzeichnet und besteht aus einer Abfolge von Datensätzen 32. Jeder Datensatz 32 weist weiterhin einen Schlüssel zum Zugriff auf den Datensatz auf.

Ein Datum ist definiert durch eine Feldidentifizierung 36 (Feld-ID) und einen Wert (schattiert), wobei der Wert einen vorgegebenen Datentyp einnehmen kann. Da Anzahl und Reihenfolge der Felder in der Zentraldatenbank 2 und der Peripheriedatenbank 9 nicht identisch sein müssen, können die übertragenen Felder auch Feldidentifizierungen 36 enthalten, anhand derer die Felder eindeutig identifiziert werden können. Die Peripherieeinheit 7 kann so die empfangenen Werte den entsprechenden Feldern der Peripheriedatenbank 9 zuordnen.

Die Identifikation eines Versandpakets durch einen Primärschlüssel 26 erlaubt es der Peripherieeinheit 7 festzustellen, ob es sich um eine Aktualisierungs- oder Einfügeoperation handelt. Im Falle einer Aktualisierungsoperation kann die Peripherieeinheit 7 die entsprechenden alten Datensätze löschen und durch neue ersetzen. Die Zuordnung der Identifikationsnummern zu Versandpaketen, Tabellen und Feldern sind vorgegeben und müssen nicht übertragen werden.

Um die zu übertragende Datenmenge möglichst gering zu halten, ist es vorgesehen alle Identifikationen, Datentypinformationen und Datenwerte binär zu übertragen. Hierzu kann das folgende Binärdatenformat verwendet werden. Alle Daten werden in Form von Paaren, bestehend aus Datentyp und den eigentlichen Nutzdaten, gespeichert.

| Datentyp | Nutzdaten |
|---|---|
| Integer | 4 Bytes (entspricht einem 32-Bit Integer) |
| Datensatz | 4 Bytes für einen 32-Bit Primärschlüssel |
| Versandpaket | 4 Bytes für eine 32-Bit Entity ID |
| ID | 4 Bytes für einen 32-Bit Primärschlüssel |
| Tabelle | 2 Bytes für eine 16-Bit Tabellen-ID |

(fortgesetzt)

| Datentyp | Nutzdaten |
|---|---|
| Feld | 2 Bytes für eine 16-Bit Feld-ID |
| String | 2 Bytes für eine 16-Bit Längenangabe(n) + n Bytes Zeichenkette |
| Datum | 8 Bytes für einen 64-Bit Real |
| Bool | 2 Bytes für einen 16-Bit boolschen Wert |
| Long | Beliebig viele Datenblöcke bestehend aus einer 2-Byte Längenangabe und entsprechend vielen Bytes Daten. Das ende der Datenblöcke wird durch die Längenangabe 0 markiert. |

Ein Versandpaket beginnt mit einem Wert vom Typ Versandpaket, gefolgt von einem Typ ID. Die Nutzdaten des Versandpakets bestimmen den Typ des Versandpakets. Die ID enthält den Primärschlüssel der Mastertabelle für dieses Versandpaket. Darauf folgen beliebig viele Tabellen und eine Ende-Markierung.

Eine Tabelle ist nur innerhalb eines Versandpakets zulässig und besteht aus einem Wert vom Typ Tabelle, der die Tabelle über ihre TabeUenidentifikationsnummer identifiziert, beliebig vielen Datensätzen und eine Ende-Markierung (in Fig. 3 nicht gezeigt).

Ein Datensatz ist nur innerhalb einer Tabelle zulässig und besteht aus einem Wert vom Typ Datensatz, beliebig vielen Daten und einer Ende-Markierung. Jeder Datensatz weist einen Schlüssel auf, der gegebenenfalls auch dem Primärschlüssel des Eintrags entsprechen kann.

Ein Datum ist nur innerhalb eines Datensatzes zulässig und besteht aus einem Wert vom Typ Feld, der die Feld-ID enthält und einem Wert beliebigen Typs, der die eigentlichen Nutzdaten enthält.

Um die zu übertragende Datenmenge weiter zu reduzieren, können Datenkompressionsverfahren eingesetzt werden. Die Zentraleinheit 1 übergibt die Daten dazu an eine Datenkompressionsvorrichtung 35, die die zu sendenden Dateien erzeugt. Der Datenkompressionsalgorithmus codiert sich wiederholende Bytefolgen mit bis zu 16 Bit Codewörtern. Während der Generierung dieser Codewörter kann eine Datenverschlüsselung angewendet werden, so daß Komprimierung und Verschlüsselung gemeinsam ausgeführt werden.

Die für die Datenbankreplikation notwendigen Dateien können beispielsweise über das UDP-Protokoll von der Zentraleinheit 1 zur Peripherieeinheit 7 übertragen werden. Dieses Protokoll gewährleistet die Übertragung von einzelnen Datenpaketen. Durch eine Prüfsumme wird die Datenintegrität einzelner Pakete gewährleistet. Es gibt jedoch keine gesicherte Übertragung eines Paketstroms. Es können also Pakete verworfen werden oder in einer anderen als der gesendeten Reihenfolge beim Empfänger ankommen. In der Zentraleinheit 1 werden für die zu sendenden Dateien Sendeverzeichnisse eingerichtet, die die zu versendenden Dateien enthalten. Die Zentraleinheit 1 überwacht diese Verzeichnisse und verwaltet Warteschlangen für die zu sendenden Dateien. Jede Datei kann mehrfach gesendet werden und verbleibt so lange in ihrer Warteschlange, bis sie so oft wie gewünscht gesendet wurde. Danach gelangt sie in eine Warteschlange der Priorität Null, die nur dann abgearbeitet wird, wenn keine Sendeaufträge höherer Priorität mehr vorhanden sind. Jede Datei bekommt eine eindeutige Dateinummer zugeordnet. Die Dateinummern werden fortlaufend vergeben.

Zum Versenden werden einzelne Dateien in Pakete aufgeteilt, die per UDP übertragen werden können. Um in der Peripherieeinheit 7 das Zusammensetzen der einzelnen Dateien aus den empfangenen Paketen zu ermöglichen, werden diese Pakete fortlaufend numeriert. Zusätzlich zu der Paketnummer enthält jedes Paket auch die der Datei zugeordnete eindeutige Dateinummer. Auf diese Weise kann jedes Paket eindeutig einer Datei und einer Position innerhalb dieser Datei zugeordnet werden.

Es sind zwei Typen von Paketen vorgesehen. Header-Pakete enthalten Informationen über die Datei (Datei-ID, Dateiname, Größe, Datum der letzten Änderung). Datenpakete enthalten eine Dateinummer, eine Paketnummer und eine festgelegte Anzahl von Datenbytes. Header-Pakete werden von der Zentraleinheit 1 vor und nach den Datenpaketen einer Datei versandt.

In der Peripherieeinheit 7 müssen die ankommenden Datenpakete wieder zu Dateien zusammengesetzt werden. Dabei ist zu berücksichtigen, daß die Pakete nicht in der gesendeten Reihenfolge ankommen und daß Pakete verlorengegangen sein können. Da jedes Paket eine eindeutige Dateinummer und eine Paketnummer enthält, ist eine eindeutige Zuordnung möglich.

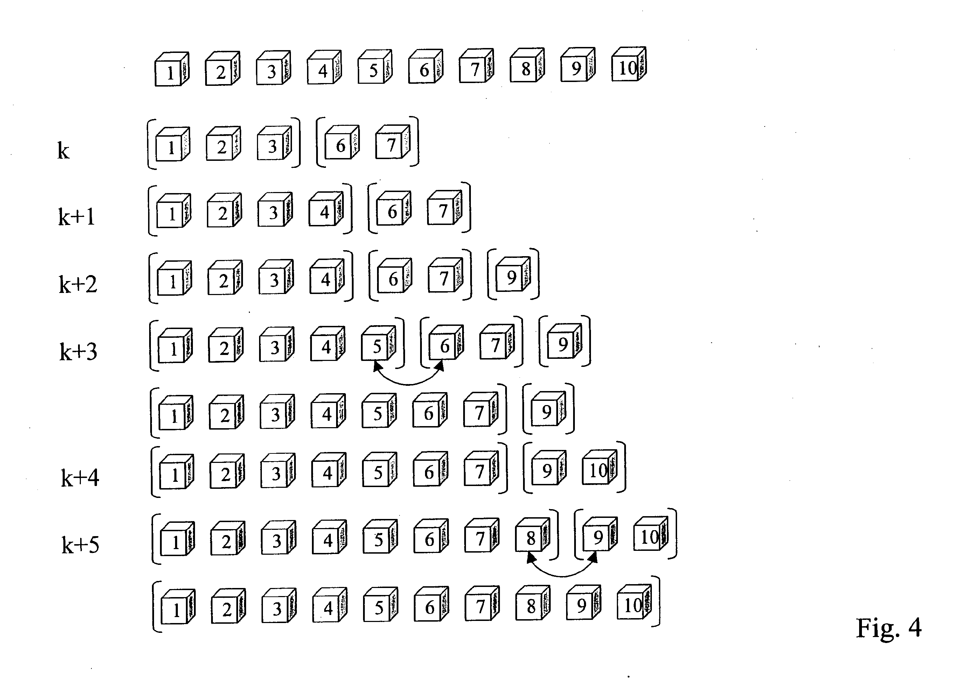

Die Fig. 4 zeigt eine Darstellung zur Erläuterung eines effizienten Verfahrens zum Verwalten von zu empfangenden Datenpaketen. Beim Empfänger der Datenpakete stellt sich das Problem, festzustellen, wann eine Datei vollständig empfangen wurde. Dies ist dann der Fall, wenn alle Datenpakete mindestens einmal empfangen wurden. Zusätzlich ist es erforderlich mindestens ein Header-Paket zu empfangen. Da für die Datenübertragung große Dateien in eine sehr große Anzahl von Datenblöcken zerlegt werden, ist es ungünstig, eine einfache Liste anzulegen und empfangene Datenpakete dort zu markieren. Der Test auf Vollständigkeit der Liste für eine Datei aus n Paketen benötigt n Operationen. Da dieser Test nach jedem empfangenen Paket durchzuführen ist, sind Operationen der Komplexität

$0(n^2)$ notwendig.

Beobachtungen einer UDP-Paketübertragung über eine Satellitenstrecke haben ergeben, daß Paketvertauschungen nur selten und Paketausfälle meist in größeren Blöcken vorkommen. Für diese Bedingungen ist das erfindungsgemäße Verfahren zum Verwalten von zu empfangenden Datenpaketen besonders geeignet.

Für jede Datei wird eine Liste von Intervallen $[a_i, b_i]$, i = 0 ... m - 1 geführt. Jedes dieser Intervalle gibt an, daß alle Pakete mit Paketnummern zwischen $\alpha_i$ und $b_i$ bereits empfangen wurden. Diese Intervalle werden in einer aufsteigenden Reihenfolge angeordnet, wobei vorausgesetzt wird, daß $b_{i-1} < a_i - 1$ für i = 1 ... m - 1 gilt. Eine Datei bestehend aus n Paketen (mit den Paketnummmem 0 ... n - 1) wurde komplett empfangen, wenn gilt: m = 1 und ao = 0 und bo = n - 1.

Nachdem ein Paket mit der Paketnummer x empfangen wurde sind die folgenden Fälle zu unterscheiden:

Fall 1: $m = 0$

$$m := 1 \text{ und } [a_0, b_0] := [x, x] \tag{1}$$

Fall 2: $m > 0$, $x \leq a_0$

$$x \geq a_0 - 1 \Rightarrow a_0 := x \tag{2}$$

$$x < a_0 - 1 \Rightarrow [a_k, b_k] := [a_{k-1}, b_{k-1}], \ k = m...1,$$

$$[a_0, b_0] := [x, x],$$

$$m := m + 1 \tag{3}$$

Fall 3: $m > 0, \exists i \in [1, m - 1]$ mit $a_{i-1} \leq x < a_i$

$$x \leq b_{i-1} \Rightarrow x \in [a_{i-1}, b_{i-1}] \tag{4}$$

$$b_{i-1} + 1 = x = a_i - 1 \Rightarrow [a_k, b_k] := [a_{k+1}, b_{k+1}], \ k = i...m-1,$$

$$[a_{i-1}, b_{i-1}] := [a_{i-1}, b_i],$$

$$m := m - 1 \tag{5}$$

$$b_{i-1} + 1 = x < a_i - 1 \Rightarrow b_{i-1} := x \tag{6}$$

$$b_{i-1} + 1 < x = a_i - 1 \Rightarrow a_i := x \tag{7}$$

$$b_{i-1} + 1 < x < a_i - 1 \Rightarrow [a_k, b_k] := [a_{k-1}, b_{k-1}], \ k = m ... i - 1,$$

$$[a_i, b_i] := [x, x],$$

$$m := m + 1 \tag{8}$$

Fall 4: $m > 0, x \geq a_{m-1}$

$$b_{m-1}+1=x \Rightarrow b_{m-1}:=x \qquad (9)$$

$$b_{m-1}+1< x \Rightarrow [a_m, b_m] := [x, x], \ m := m+1 \qquad (10)$$

$$x \leq b_{m-1} \Rightarrow x \in [a_{m-1}, \ b_{m-1}] \qquad (11)$$

Da die Intervalle aufsteigend sortiert sind, kann die Suche in der Intervalliste mit Hilfe einer binären Suche erfolgen, deren Komplexität O(log(m ist.

Das Anpassen der Intervalle geschieht wie folgt: In (1) wird das erste Paket empfangen und somit das erste Intervall erzeugt. In (4) und (11) wurde das Paket schon einmal empfangen und es ist keine weitere Aktion nötig. (2), (6), (7) und (9) verändern nur die Grenze eines schon vorhandenen Intervalls. In (10) wird ein neues Intervall am Ende der Liste erzeugt. (3) und (8) erfordern das Einfügen eines neuen Intervalls in die bestehende Liste. (5) führt zwei aufeinanderfolgende Intervalle zusammen.

In den Fällen (1), (2), (4), (6), (7), (9), (10), (11) liegt eine optimale Komplexität O(1) vor. In (3), (5), (8) ist eine Komplexität O(m) erforderlich. Bei ungestörtem Empfang und nicht vertauschter Paketreihenfolge tritt einmal (1) und sonst nur (9) auf. Dabei gilt stets m <= 1, und somit entsteht eine optimale Gesamtkomplexität O(1). Bei gestörtem Empfang zeigt sich, daß m erheblich kleiner ist als n. Trotz einer großen Anzahl von Paketen entstehen also nur wenige Intervalle. Die von der Komplexität aufwendigen Fälle (3), (5), (8) sind dabei eher selten, da Pakete erfahrungsgemäß immer in aufeinanderfolgenden Gruppen ausfallen oder ankommen.

In Fig. 4 ist ein Beispiel für das erfindungsgemäße Verfahren für zehn Datenpakete dargestellt. In Schritt k wurden bereits zwei zusammenhängende Bereiche von Datenpaketen empfangen. Das erste Intervall umfaßt die Datenpakete mit den Paketnummern 1, 2, 3 und das zweite Intervall umfaßt die Datenpakete mit den Paketnummern 6, 7.

In Schritt k + 1 wurde ein neues Datenpaket mit der Paketnummer 4 empfangen und die obere Intervallgrenze des ersten Intervalls entsprechend angepaßt.

In Schritt k + 2 wurde ein Datenpaket mit der Paketnummer 9 empfangen und ein neues Intervall erzeugt.

In Schritt k + 3 wurde nach dem Empfang des Datenpakets mit der Paketnummer 5 festgestellt, daß die Intervallgrenzen des ersten und zweiten Intervalls einen zusammenhängenden Bereich bilden. Die beiden Intervalle können somit zu einem gemeinsamen Intervall zusammengefaßt werden.

In Schritt k + 4 wurde ein neues Datenpaket mit der Paketnummer 10 empfangen.

In Schritt k + 5 wurde ein neues Datenpaket mit der Paketnummer 8 empfangen und festgestellt, daß die beiden verbleibenden Intervalle einen zusammenhängenden Bereich angeben. Nach Vereinigung der beiden Intervalle kann von dem erfindungsgemäßen Verfahren sehr effizient festgestellt werden, daß alle Datenpakete empfangen wurden, da nunmehr ein Intervall mit Intervallgrenzen, die der Startnummer und der Endnummer der zu empfangenden Datenpakete entsprechen, vorliegt.

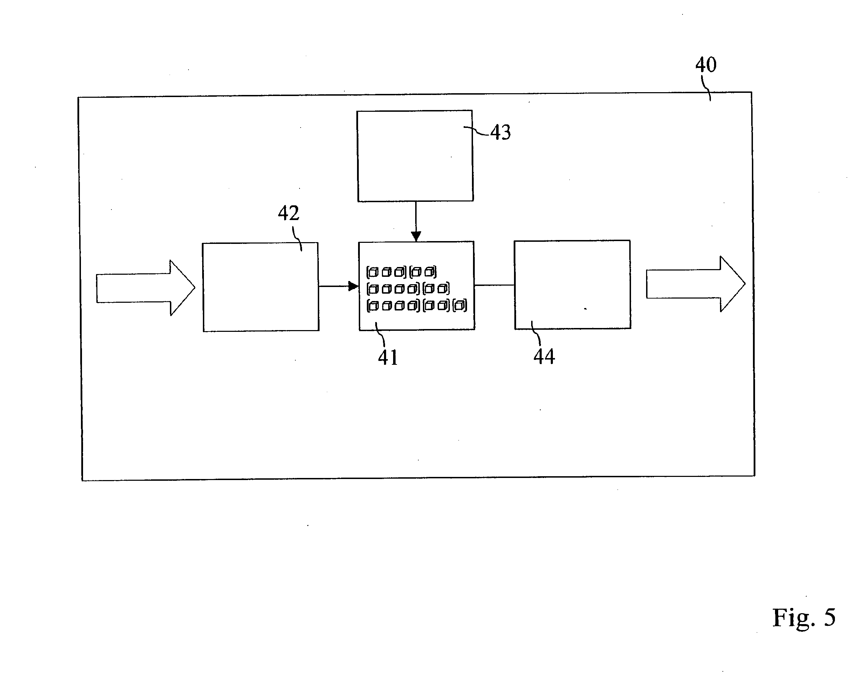

Die Fig. 5 zeigt eine Datenverarbeitungsvorrichtung 40 zum Verwalten von zu empfangenden Datenpaketen mit einer fortlaufenden Paketnummer beginnend mit einer Startnummer bis zu einer Endnummer. Die Datenverarbeitungsvorrichtung 40 weist Listenverwaltungsmittel 41 zum Verwalten einer Liste von Intervallen und Empfangsmittel 42 zum Empfang von Datenpaketen sowie Prüfmittel 43 zum Prüfen, ob die Paketnummer eines empfangenen Datenpakets den Bereich eines bereits bestehenden Intervalls zusammenhängend erweitert, auf. Die Listenverwaltungsmittel 41 aktualisieren für diesen Fall die entsprechende Intervallgrenze des Intervalls und prüfen, ob das aktualisierte Intervall mit einem anderen Intervall einen zusammenhängenden Bereich bildet. Für diesen Fall werden die beiden Intervalle zu einem gemeinsamen Intervall vereinigt. Die Listenverwaltungsmittel 41 erzeugen für den Fall, daß keine Intervallgrenze aktualisiert wurde, ein neues Intervall mit der Paketnummer des empfangenen Datenpakets als Intervallgrenze.

Um die Belastung des Empfängers weiter zu reduzieren, können die wiederholt empfangenen Pakete einer bereits korrekt empfangenen Datei verworfen werden.

Da die Dateien anhand einer fortlaufenden Dateinumerierung identifiziert werden, eignet sich das erfindungsgemäße Verfahren auch zur Verwaltung einer Vielzahl von zu empfangenden Dateien mit fortlaufenden Dateinummern. Im Laufe der Zeit können jedoch im Empfänger Dateien mit einer Dateinummer anfallen, die vom Sender der Pakete nicht mehr verwendet werden. Diese veralteten Dateien können vom Empfänger verworfen werden. Um diese veralteten Dateien zu entfernen, können in den Headerpaketen zusätzlich zu den Dateiinformationen auch die minimale und die maximale Dateinummer, die der Sender verwendet, übertragen werden. Auf diese Weise kann der Empfänger seine Intervalliste für die Dateinummern bereinigen.

Um eine große sich ständig ändernde Anzahl von Dateien mehrfach und priorisiert zu senden, können die zu versendenden Dateien in Warteschlangen unterschiedlicher Priorität organisiert werden. Warteschlangen höherer Priorität werden vorrangig bedient. Die erste Datei in der Warteschlange mit der höchsten Priorität wird gesendet, und anschließend entweder ans Ende derselben Warteschlange zurückgestellt, oder, nachdem sie oft genug gesendet wurde, ans Ende einer Warteschlange mit einer niedrigeren Priorität gestellt. Wenn alle Warteschlangen mit einer Priorität >0 geleert sind, wird die Warteschlange mit der Priorität 0 wiederholt abgearbeitet. Auf diese Weise wird jede Datei so oft wie anfänglich festgesetzt versendet.

Um auf Änderungen im Dateisystem des Senders (Sendeverzeichnis) effizient zu reagieren und die Warteschlangen entsprechend zu füllen oder Einträge daraus zu entfernen ist das erfindungsgemäße Verfahren zum Verwalten einer Mehrzahl von zu sendenden Dateien vorgesehen. Nach dem Einlesen einer Sendeliste der zu sendenden Dateien wird festgestellt, ob neue Dateien hinzugekommen oder Dateien, die sich noch in einer Warteschlange befinden, zu löschen sind.

Würde man für jede Datei in der Sendeliste alle Warteschlangen durchlaufen, um festzustellen, wo und ob sich die Datei darin befindet, würde ein Algorithmus der Komplexität $O(n^2)$ entstehen. Bei einer sehr großen Anzahl von zu versendenden Dateien (mehrere Tausend) ist dies nicht mehr effizient durchführbar.

Eine Datei wird deshalb durch einen Sendeeintrag repräsentiert, der Angaben über den Dateinamen, die Dateigröße und die Zeit der letzten Änderung der Datei enthält. Diese Sendeeinträge werden in doppelt verketteten linearen Listen angeordnet. Es gibt so viele Listen wie Prioritäten. Doppelt verkettete lineare Listen haben den Vorteil, daß Elemente aus diesen Listen leicht gelöscht werden können, ohne daß die gesamte Liste zu durchlaufen oder auch nur der Listenanfang zu kennen ist. Nur das Listenelement selbst muß bekannt sein.

Zusätzlich wird jeder Sendeeintrag als ein Knoten in einem binären Baum repräsentiert. Für jedes Sendeverzeichnis kann ein eigener binärer Baum zum schnellen Suchen vorgesehen sein. Um eine Komplexität O(log n) zu gewährleisten, sind ausgeglichene oder balancierte Bäume vorgesehen. Beim Einlesen einer neuen Sendeliste kann über den binären Baum schnell festgestellt werden, ob eine neue Datei hinzugekommen ist oder sich Änderungen in den Dateiattributen ergeben haben.

Diejenigen Dateien, für die ein Eintrag in dem Sendebaum ermittelt werden kann, befinden sich bereits in einer Warteschlange. Neue Dateien, die sich nicht in dem Baum befinden, müssen in eine Warteschlange eingereiht werden. Jedem Sendeverzeichnis kann eine Priorität und eine Wiederholrate zugeordnet werden, anhand deren die passende Warteschlange bzw. der entsprechende Baum ermittelt werden kann.

Um festzustellen, ob Dateien aus dem Dateisystem bzw. der Sendeliste entfernt wurden, wird ermittelt, ob sich ein entsprechender Eintrag für die Datei in dem Sendebaum befindet. Ein gefundener Eintrag wird aus dem Baum entfernt und in einen Nachfolgebaum eingefügt. Auf diese Weise wird erreicht, daß der Nachfolgebaum diejenigen Dateien enthält, die sowohl in der ursprünglichen als auch in der neuen Sendeliste enthalten sind. Nach dem Entfernen der aufgefundenen Sendeeinträge weist der Sendebaum diejenigen Dateien auf, die in der ursprünglichen Sendeliste enthalten waren und die in der neuen Sendeliste fehlen. Diese Dateien können nun aus den Warteschlangen entfernt werden.

Da der Zugriff auf die Einträge der Dateien über die Baumstruktur erfolgt, können die entsprechenden Einträge besonders schnell ermittelt werden. Aufgrund der Realisierung der Warteschlangen durch eine doppelt verkettete lineare Liste ist es möglich, auf die Einträge der Liste über die Baumstruktur zuzugreifen und Listeneinträge zu löschen, ohne daß eine vollständige Abarbeitung der gesamten Liste notwendig ist.

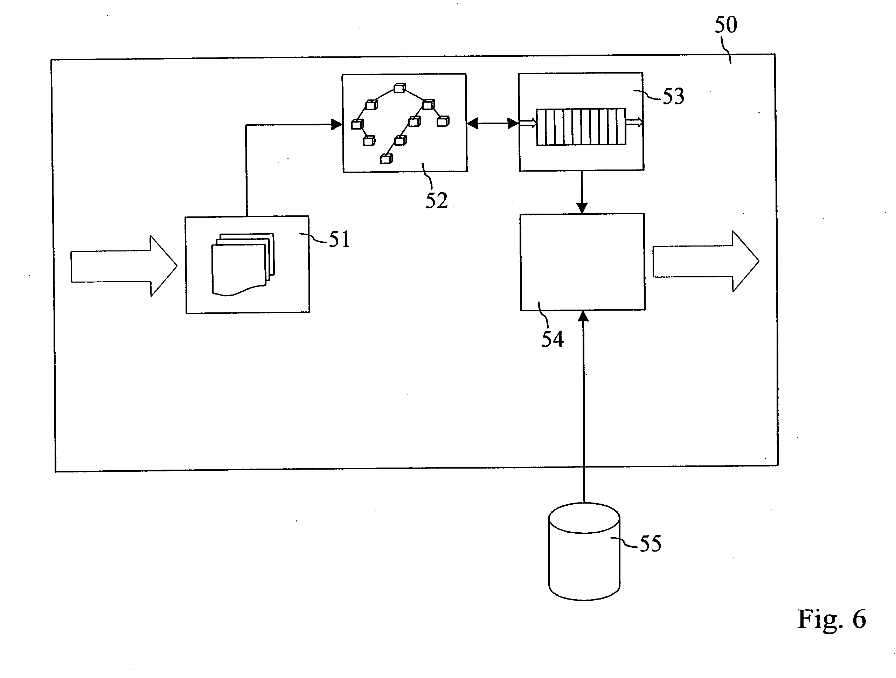

Die Fig. 6 zeigt eine Datenverarbeitungsvorrichtung 50 zum Verwalten einer Mehrzahl von zu sendenden Dateien. Empfangsmittel 51 lesen eine Sendeliste ein, die die zu sendenden Dateien angeben. Binärbaumverwaltungsmittel 52 legen anhand der eingelesenen Sendeliste binäre Bäume an, deren Knoten jeweils einen Sendeeintrag für eine zu sendende Datei aufweisen, in dem Informationen über die Datei gespeichert sind. Warteschlangenmittel 53 verwalten Sendewarteschlangen für die zu sendenden Dateien, wobei die Sendewarteschlangen durch das Speichern von Verweisen auf Knoten der nachfolgend zu versendenden Dateien in den Sendeeinträgen des Sendebaums gebildet werden. Sendemittel 54 wählen Einträge für zu sendende Dateien aus. Dies geschieht vorzugsweise mittels der Warteschlangenmittel 53, die nach einem FiFo-(first in first out)Prinzip eine oder mehrere Warteschlangen mit unterschiedlichen Prioritäten für die zu versendenden Dateien bilden. Die aktuell zu versendende Datei wird in dem Dateisystem 55 gelesen und von dem Sendemittel 54 gesendet. Nach dem Senden wird der Sendeeintrag aus dem Sendebaum und/oder der Warteschlange entfernt oder der Sendeintrag wird wieder am Ende der Sendewarteschlange (oder nach der gewünschten Anzahl Sendungen am Ende der Warteschlange mit Priorität Null) eingereiht.

**Patentansprüche**

1. Verfahren zum Übertragen von relationalen Datenbanken von einer Zentraldatenbank (2) über eine unidirektionale Datenkommunikationsverbindung (10) zu einer Peripheriedatenbank (9), wobei die Zentraldatenbank (2) mehrere Tabellen (20-25) aufweist, die jeweils einen oder mehrere Datensätze (32) umfassen, die Datensätze (32) jeweils einen Schlüssel aufweisen und ein Eintrag in der Datenbank (2) mehrere in unterschiedlichen Tabellen (20-25) gespeicherte Datensätze (32) umfaßt, auf die über die Schlüssel zugegriffen wird,
wobei das Verfahren folgende Schritte umfaßt:

(a) Auswahl eines Eintrags zum Versenden;
(b) Ermitteln aller Datensätze (32) der Tabellen (20-25) für den ausgewählten Eintrag anhand der Datensatzschlüssel;
(c) Zusammenstellen eines Versandpakets (30) für den Eintrag aus den ermittelten Datensätzen (32);
(d) Übertragen des Versandpakets (30) an die Peripheriedatenbank (9); und
(e) Einfügen der Datensätze des Versandpakets (30) in die Tabellen (20-25) der Peripheriedatenbank (9).

2. Verfahren nach Anspruch 1, wobei diejenigen Einträge der Zentraldatenbank (2) ausgewählt und übertragen werden, die in der Zentraldatenbank (2) neu eingetragen wurden.

3. Verfahren nach Anspruch 1 oder 2, wobei die Tabellen (20-25) jeweils eine eindeutige Tabellenidentifikation (33) besitzen und ein Versandpaket (30) die Tabellenidentifikationen (33) für diejenigen Tabellen (20-25), die Datensätze (32) für den ausgewählten Eintrag aufweisen, und für jede dieser Tabellen (20-25) die jeweiligen Datensätze (32) für den Eintrag umfaßt.

4. Verfahren nach zumindest einem der Ansprüche 1 bis 3, wobei ein Eintrag durch einen Primärschlüssel (26) identifiziert wird, der Primärschlüssel (26) in dem Versandpaket (30) an die Peripheriedatenbank (9) übertragen wird und die Peripheriedatenbank (9) anhand des empfangenen Primärschlüssels (26) feststellt, ob ein neuer Eintag in die Tabellen (20-25) der Peripheriedatenbank (9) eingetragen oder ein bereits bestehender Eintrag ersetzt werden soll.

5. Datenverarbeitungsvorrichtung mit einer Zentraleinheit (1), einer Peripherieeinheit (7) und einer unidirektionalen Datenkommunikationseinrichtung (10) zum Übertragung von Daten von der Zentraleinheit (1) zur Peripherieeinheit (7), wobei die Zentraleinheit (1) Datenbankmittel aufweist, die eine Zentraldatenbank (2) aus mehreren Tabellen (20-25) speichern, die jeweils einen oder mehrere Datensätze (32) umfassen, eine Auswahleinrichtung einen Eintrag in der Zentraldatenbank (2) auswählt, der mehrere in unterschiedlichen Tabellen (20-25) gespeicherte Datensätze (32) umfaßt, auf die über Schlüssel zugegriffen wird, die Zentraleinheit (1) alle Datensätze (32) für den ausgewählten Eintrag anhand der Datensatzschlüssel ermittelt und ein Versandpaket (30) für den Eintrag aus den ermittelten Datensätzen (32) zusammenstellt, die Datenkommunikationseinrichtung (10) das Versandpaket (30) an die Peripherieeinheit (7) überträgt und die Peripherieeinheit (7) Datenbankmittel aufweist, die Datensätze (32) des Versandpakets (30) in die Tabellen (20-25) einer Peripheriedatenbank (9) einfügen.

6. Datenverarbeitungsvorrichtung nach Anspruch 5, wobei die Datenbankmittel der Peripherieeinheit (7) anhand eines empfangenen Primärschlüssels (26) feststellen, ob ein neuer Eintag in die Tabellen der Peripheriedatenbank (9) eingetragen oder ein bereits bestehender Eintrag ersetzt werden soll.

7. Datenverarbeitungsvorrichtung nach Anspruch 5 oder 6, wobei die Zentraleinheit (1) zumindest eine Warteschlange für die zu sendenden Versandpakete (30) bzw. Dateien (31) aufweist.

8. Datenverarbeitungsvorrichtung nach zumindest einem der Ansprüche 5 bis 7, wobei die Datenkommunikationseinrichtung (10) ein Versandpaket (30) bzw. eine Datei (31) gleichzeitig an mehrere Peripheriedatenbanken (9) überträgt.

9. Datenverarbeitungsvorrichtung nach zumindest einem der Ansprüche 5 bis 8, wobei die Zentraleinheit (1) eine Datenverschlüsselungsvorrichtung und/oder eine Datenkompressionsvorrichtung (35) aufweist.

10. Verfahren zum Verwalten von zu empfangenden Datenpaketen mit einer fortlaufenden Paketnummer beginnend mit einer Startnummer bis zu einer Endnummer durch Erzeugen einer Liste von Intervallen, die jeweils einen zusammenhängenden Bereich von bereits empfangenen Paketnummern angeben, wobei ein Intervall zwei Intervallgrenzen zur Angabe des Bereichs der bereits empfangenen Paketnummern aufweist,
wobei das Verfahren folgende Schritte umfaßt:

(a) Empfang eines Datenpakets;
(b) Prüfen, ob die Paketnummer des empfangenen Datenpakets den Bereich eines bereits bestehenden Intervalls zusammenhängend erweitert, und, für diesen Fall, Aktualisieren der entsprechenden Intervallgrenze; (c) falls eine Intervallgrenze aktualisiert wurde, Prüfen, ob das aktualisierte Intervall mit einem anderen Intervall einen zusammenhängenden Bereich bildet, und, für diesen Fall, Vereinigen der beiden Intervalle zu einem gemeinsamen Intervall, dessen Intervallgrenzen den gemeinsamen zusammenhängenden Bereich angeben; (d) falls keine Intervallgrenze aktualisiert wurde, Erzeugen eines neuen Intervalls mit der Paketnummer des empfangenen Datenpakets als Intervallgrenzen; (e) Fortsetzung des Verfahrens mit Schritt (a) wenn ein weiteres Datenpaket vorliegt.

**11.** Verfahren nach Anspruch 10, wobei die Liste der Intervalle nach den Intervallgrenzen sortiert ist und in Schritt (c) die veränderte Intervallgrenze des aktualisierten Intervalls mit der entsprechenden Intervallgrenze eines benachbarten Intervalls der sortierten Liste verglichen wird.

**12.** Verfahren nach Anspruch 10 oder 11, wobei in Schritt (b) die Liste der Intervalle mittels einer binären Suche durchsucht wird, um zu prüfen, ob die Paketnummer des empfangenen Datenpakets den Bereich eines bereits bestehenden Intervalls zusammenhängend erweitert.

**13.** Verfahren nach zumindest einem der Ansprüche 10 bis 12, wobei in Schritt (c) ein gemeinsames Intervall gebildet wird, wenn die obere Intervallgrenze eines Intervalls um Eins kleiner als die untere Intervallgrenze eines anderen Intervalls ist, wobei die untere Intervallgrenze des gemeinsamen Intervalls den kleineren Wert der unteren Intervallgrenzen der beiden Intervalle und die obere Intervallgrenze des gemeinsamen Intervalls den größeren Wert der oberen Intervallgrenzen der beiden Intervalle annimmt.

**14.** Verfahren nach zumindest einem der Ansprüche 10 bis 13, wobei festgestellt wird, dass alle zu empfangenden Datenpakete empfangen wurden, wenn die Liste nur ein Intervall aufweist, dessen eine Intervallgrenze mit der Startnummer und dessen andere Intervallgrenze mit der Endnummer der zu empfangenden Datenpakete übereinstimmen.

**15.** Verwendung des Verfahrens nach einem oder mehreren der Ansprüche 10 bis 14 zur Verwaltung einer Vielzahl von zu empfangenden Dateien mit fortlaufenden Dateinummern.

**16.** Datenverarbeitungsvorrichtung zum Verwalten von zu empfangenden Datenpaketen mit einer fortlaufenden Paketnummer beginnend mit einer Startnummer bis zu einer Endnummer, wobei die Datenverarbeitungsvorrichtung aufweist: Listenverwaltungsmittel (41) zum Verwalten einer Liste von Intervallen, die jeweils einen zusammenhängenden Bereich von bereits empfangenen Paketnummern angeben, wobei ein Intervall zwei Intervallgrenzen zur Angabe des Bereichs der bereits empfangenen Paketnummern aufweist , Empfangsmittel (42) zum Empfang von Datenpaketen und Prüfmittel (43) zum Prüfen, ob die Paketnummer eines empfangenen Datenpakets den Bereich eines bereits bestehenden Intervalls zusammenhängend erweitert, wobei die Listenverwaltungsmittel (41) für diesen Fall die entsprechende Intervallgrenze des Intervalls aktualisieren und prüfen, ob das aktualisierte Intervall mit einem anderen Intervall einen zusammenhängenden Bereich bildet, und, für diesen Fall, die beiden Intervalle zu einem gemeinsamen Intervall, dessen Intervallgrenzen den gemeinsamen zusammenhängenden Bereich angeben, vereinigen, wobei die Listenverwaltungsmittel (41) für den Fall, dass keine Intervallgrenze aktualisiert wurde, ein neues Intervall mit der Paketnummer des empfangenen Datenpakets als Intervallgrenzen erzeugen.

**17.** Datenverarbeitungsvorrichtung nach Anspruch 16, wobei Entscheidungsmittel (44) vorgesehen sind, die feststellen, dass alle zusammengehörenden Datenpakete empfangen wurden, wenn die Liste nur ein Intervall aufweist, dessen Intervallgrenzen die Startnummer und die Endnummer der zu empfangenden Datenpakete sind.

**18.** Verfahren zum Verwalten einer Mehrzahl von zu sendenden Dateien, die durch eine Liste der zu sendenden Dateien angegeben wird, wobei für jede zu sendende Datei der Sendeliste ein Eintrag in einem binären Baum angelegt wird, und das Versenden der Dateien durch eine Sendewarteschlange erfolgt, wobei das Verfahren folgende Schritte umfaßt:

- Anlegen eines zweiten binären Baums für eine neue Sendeliste;
- Vergleichen des zweiten Baums mit dem aktuellen Sendebaum und Ermitteln von Dateien, die in der ursprünglichen Sendeliste aufgeführt waren und in der neuen Sendeliste fehlen;
- Entfernen der Einträge der fehlenden Dateien aus der Sendewarteschlange; und
- Verwendung des zweiten Baums als aktuellen Sendebaum.

**19.** Verfahren zum Verwalten einer Mehrzahl von zu sendenden Dateien, die durch eine Liste der zu sendenden Dateien angegeben wird, wobei für jede zu sendende Datei der Sendeliste ein Sendeeintrag angelegt wird, in dem Informationen über die zu sendende Datei gespeichert werden, die Sendeeinträge in Form eines binären Baums, dessen Knoten jeweils einen Sendeeintrag aufweisen, gespeichert werden, und Sendeeinträge aus dem Sendebaum ausgewählt, die zugeordnete Datei gesendet und der Sendeeintrag aus dem Sendebaum entfernt wird, wobei das Verfahren folgende Schritte umfaßt:

(a) Einlesen einer neuen Sendeliste;
(b) Auswählen einer Datei aus der Sendeliste;
(c) Suchen des Sendeeintrags der ausgewählten Datei in dem aktuellen Sendebaum und Entfernen des gefundenen Sendeeintrags aus dem aktuellen Sendebaum, falls der Sendeeintrag gefunden wurde;
(d) Anlegen eines neuen Sendeeintrags für die ausgewählte Datei in einem zweiten binären Baum;
(e) Auswählen einer bisher noch nicht ausgewählten Datei aus der Sendeliste und Fortsetzen des Verfahrens mit Schritt (c), solange noch nicht alle Dateien der Sendeliste ausgewählt wurden; und
(f) Löschen der verbleibenden Sendeeinträge des Sendebaums und Verwenden des zweiten Baums als aktuellen Sendebaum.

**20.** Verfahren nach Anspruch 18 oder 19, wobei das Entfernen des Sendeeintrags aus dem Sendebaum und das Anlegen eines neuen Sendeeintrags in dem zweiten Baum durch das Verändern von Verweisen auf die Knoten der Bäume erfolgt.

**21.** Verfahren nach einem der Ansprüche 18 bis 20, wobei das Versenden der Dateien durch eine Sendewarteschlange erfolgt, die durch das Speichern von Verweisen auf Knoten der nachfolgend zu versendenden Dateien in den Sendeeinträgen des Sendebaums gebildet wird.

**22.** Datenverarbeitungsvorrichtung zum Verwalten einer Mehrzahl von zu sendenden Dateien, die durch eine Liste der zu sendenden Dateien angegeben wird, mit Binärbaumverwaltungsmittel (52) zum Anlegen und Verwalten von binären Bäumen, die für die zu sendenden Dateien jeweils einen Eintrag aufweisen,
Warteschlangenmittel (53) zum Verwalten einer Sendewarteschlange für die zu sendenden Dateien, wobei
die Binärbaumverwaltungsmittel (52) für eine neue Sendeliste einen zweiten binären Baum anlegen, den zweiten Baum mit dem aktuellen Sendebaum vergleichen, Dateien ermitteln, die in der ursprünglichen Sendeliste aufgeführt waren und in der neuen Sendeliste fehlen, und den zweiten Baum fortan als aktuellen Sendebaum verwenden, und
die Warteschlangenmittel (53) die Einträge der fehlenden Dateien aus der Sendewarteschlange entfernen.

**23.** Datenverarbeitungsvorrichtung zum Verwalten einer Mehrzahl von zu sendenden Dateien, die durch eine Liste der zu sendenden Dateien angegeben wird, mit
Empfangsmittel (51) zum Einlesen der Sendeliste, Binärbaumverwaltungsmittel (52) zum Anlegen und Verwalten von binären Bäumen, deren Knoten jeweils einen Sendeeintrag aufweisen, in dem Informationen über eine zu sendende Datei gespeichert sind,
Sendemittel (54), die Sendeeinträge aus einem Sendebaum auswählen, die zugeordnete Datei senden und den Sendeeintrag aus dem Sendebaum entfernen, wobei
die Empfangsmittel (51) eine neue Sendeliste einlesen,
die Binärbaumverwaltungsmittel (52) solange eine Datei aus der neuen Sendeliste auswählen, bis alle Dateien der Sendeliste ausgewählt wurden; den Sendeeintrag der ausgewählten Datei in dem aktuellen Sendebaum suchen; den gefundenen Sendeeintrag der ausgewählten Datei entfernen, falls der Sendeeintrag gefunden wurde; einen neuen Sendeeintrag für die ausgewählte Datei in einem zweiten binären Baum anlegen; und die Binärbaumverwaltungsmittel (52), nachdem alle Dateien der neuen Sendeliste ausgewählt wurden, die verbliebenen Sendeeinträge des Sendebaums löschen und den zweiten Baum fortan als aktuellen Sendebaum verwenden.

**24.** Datenverarbeitungsvorrichtung nach einem der Ansprüche 47 bis 49, wobei Warteschlangenmittel (53) zum Verwalten einer Sendewarteschlange für die zu sendenden Dateien vorgesehen sind, wobei die Sendewarteschlange durch das Speichern von Verweisen auf Knoten der nachfolgend zu versendenden Dateien in den Sendeeinträgen des Sendebaums gebildet wird und/oder die Auswahl der Sendeeinträge aus dem Sendebaum durch die Sendemittel mittels der Warteschlangenmittel (53) erfolgt.

**25.** Digitales Speichermedium, insbesondere Diskette, mit elektronisch auslesbaren Steuersignalen, die so mit einem programmierbaren Computersystem zusammenwirken können, dass ein Verfahren nach einem der Ansprüche 1 bis 4 oder 10 bis 14 oder 18 bis 21 ausgeführt wird.

26. Computer-Programm-Produkt mit auf einem maschinenlesbaren Träger gespeicherten Programmcode zur Durchführung des Verfahrens nach einem der Ansprüche 1 bis 4 oder 10 bis 14 oder 18 bis 21, wenn das Programmprodukt auf einem Rechner abläuft.

27. Computer-Programm mit Programmcode zur Durchführung des Verfahrens nach einem der Ansprüche 1 bis 4 oder 10 bis 14 oder 18 bis 21, wenn das Programm auf einem Rechner abläuft.

Fig. 1

EP 1 343 099 A2

**Tabelle I**

| Primär-schlüssel | Auftrags-nummer | Fahrz.Typ-schlüssel | Baujahr | Kilometer |
|---|---|---|---|---|
| 5 | 143 | 17 | 1997 | 51500 |
| 6 | 147 | 22 | 1999 | 12300 |

**Tabelle IV**

| Hersteller-schlüssel | Hersteller |
|---|---|
| 1 | Audi |
| 2 | BMW |

**Tabelle III**

| Fahrzeugtyp-schlüssel | Typ | Hersteller-schlüssel |
|---|---|---|
| 17 | 520 | 2 |
| 18 | Golf | 28 |

**Tabelle V**

| Ausstattungs-schlüssel | Ausstattungs-merkmal |
|---|---|
| 1 | ABS |
| 2 | AHK |
| 3 | Airback |
| 4 | Radio |

**Tabelle II**

| Primär-schlüssel | Ausstattungs-schlüssel |
|---|---|
| 5 | 1 |
| 5 | 2 |
| 5 | 4 |

**Tabelle VI**

| Primär-schlüssel | Schadens-bericht |
|---|---|
| 5 | Kotflügel vorne links u. Motorhaube beschädigt |

Fig. 2

EP 1 343 099 A2

Datei-ID

Versandpaket-ID ～ 34

Primärschlüssel ～ 26

Tabellen-ID (I) ～33

| 1 | 5 | 2 | 143 | 3 | 17 | 4 | 1997 | 5 | 51500 |

Tabellen-ID (II) ～33

| 18 | 5 | 19 | 1 |
| 18 | 5 | 19 | 2 |
| 18 | 5 | 19 | 4 |

～32

Tabellen-ID (III) ～33

| 52 | 17 | 53 | 520 | 54 | 2 | ～32

Tabellen-ID (IV) ～33

| 68 | 2 | 69 | BMW | ～32

...

～30

Versandpaket-ID ～ 34

Primärschlüssel ～ 26

Tabellen-ID (I) ～33

| 1 | 6 | 2 | 147 | 3 | 22 | 4 | 1999 | 5 | 12300 |

36 ～ 32

～30

～31

Fig. 3

EP 1 343 099 A2

k

k+1

k+2

k+3

k+4

k+5

Fig. 4

Fig. 5

Fig. 6